# EUROPEAN PATENT APPLICATION

(11) **EP 2 252 122 A1**
(43) Date of publication of application: **17.11.2010**
(21) Application number: 09713406.8
(22) Date of filing: 18.02.2009
(51) Int. Cl.: H04W 60/00, H04W 12/08, H04W 16/26, H04W 36/38

(54) **MOBILE COMMUNICATION SYSTEM, POSITION REGISTRATION METHOD, HANDOVER METHOD, EXCHANGE STATION, MOBILE STATION, AND RADIO CONTROL STATION**

(30) Priority: 18.02.2008 JP 2008036571
(71) Applicant: NTT DOCOMO, INC., Chiyoda-ku Tokyo 100-6150 (JP)
(72) Inventor: MASUDA, Masafumi, Tokyo 100-6150 (JP); SATO, Takaaki, Tokyo 100-6150 (JP); ONOE, Seizo, Tokyo 100-6150 (JP)
(74) Representative: HOFFMANN EITLE
(86) International application number: PCT/JP2009/052806
(87) International publication number: WO 2009/104648

(57) **Abstract**

Provided is a mobile communication system configured to permit a cell under a femto radio base station Node B#2 to register a position of a mobile station UE only under the following conditions: [1] the femto radio base station NodeB#2 is set to an open state; [2] the femto radio base station NodeB#2 is set to a closed state and manages an access list in which a mobile station UE is set as an accessible mobile station; or [3] the femto radio base station NodeB#2 is set to the closed state and manages an access list in which particular information indicating all the mobile stations is set as information indicating the accessible mobile stations.

## Description

### TECHNICAL FIELD

The present invention relates to a mobile communication system, a location registration method, an exchange, and a mobile station, which are configured to determine whether a location, registration processing of a mobile station is allowed to a cell under a radio base station which can be set to either an open state or a closed state.

The present invention further relates to a mobile communication system, a handover method, and a radio control station, which are configured to determine whether a handover of a mobile station is allowed to a cell under a radio base station which is capable of being set to either an open state or a closed state.

In recent years, a "W-CDMA (Wideband-Code Division Multiple Access) mobile communication system based on the Code Division Multiple Access (CDMA) technology or a mobile communication system called the UMTS (Universal Mobile Telecommunications System) has been proposed by 3GPP (3^{rd} Generation Partnership Projects) and specified in "Non-patent Document 1."

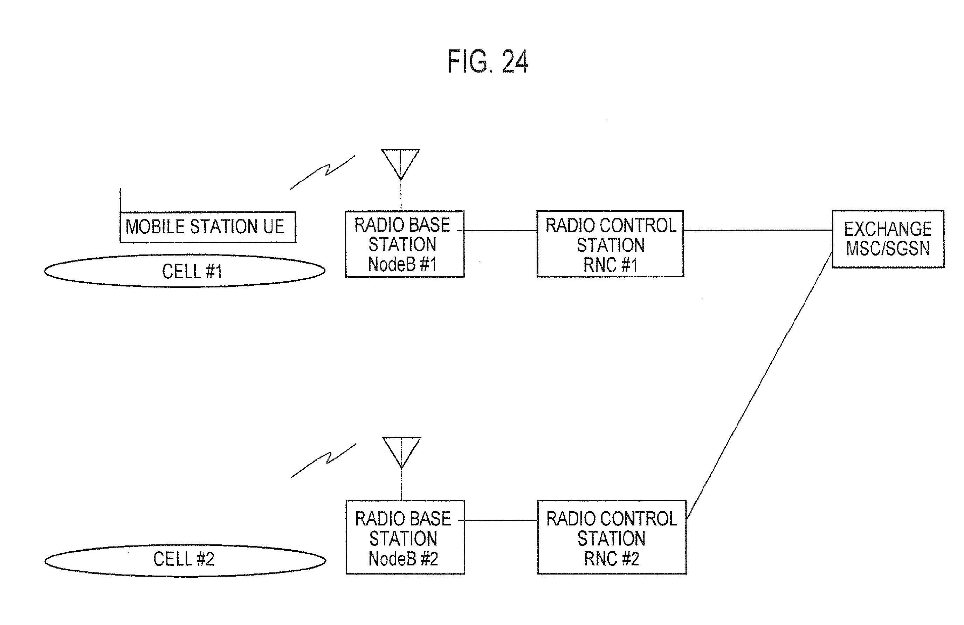

Here, referring to FIG. 24 to FIG. 26, a W-CDMA mobile communication system is described.

As shown in FIG. 24, a W-CDMA mobile communication system constitutes a cellular mobile communication system including a mobile station UE (User Equipment), a radio base station NodeB, a radio control station RNC (Radio Network Controller), and an exchange MSC/SGSN (Mobile Switching Center/Serving GPRS Support Node). A control unit in such cellular mobile communication system is an area called "Cell."

In the mobile communication system described above, there are, in general, a plurality of exchanges MSC/SGSN which are connected to each other. In the example shown in FIG. 24, however, only one exchange MSC/SGSN is shown, for the sake of simplicity.

Also, in the mobile communication system described above, in addition to the exchange, a system called a home memory is, in general, provided to store subscriber information. In the example shown in FIG. 24, however, the function of the home memory is assumed to be included in the exchange MSC/SGSN, for the sake of simplicity.

In a W-CDMA mobile communication system, a mobile station UE, which is powered on but not in the communication state, that is, a mobile station UE in a "standby state" for a call by user' s terminal operation or reception of a call, is configured to measure receiving power of a pilot signal transmitted from a radio base station NodeB and autonomously select an optimum pilot signal (i.e., a cell corresponding to an optimum pilot signal). Description of an algorithm for such selection is omitted.

A mobile station UE, which has selected an optimum pilot signal (i.e., a cell corresponding to an optimum pilot signal) is configured to stand by in the cell. Here, the mobile station UE is configured to perform the location registration processing to the cell.

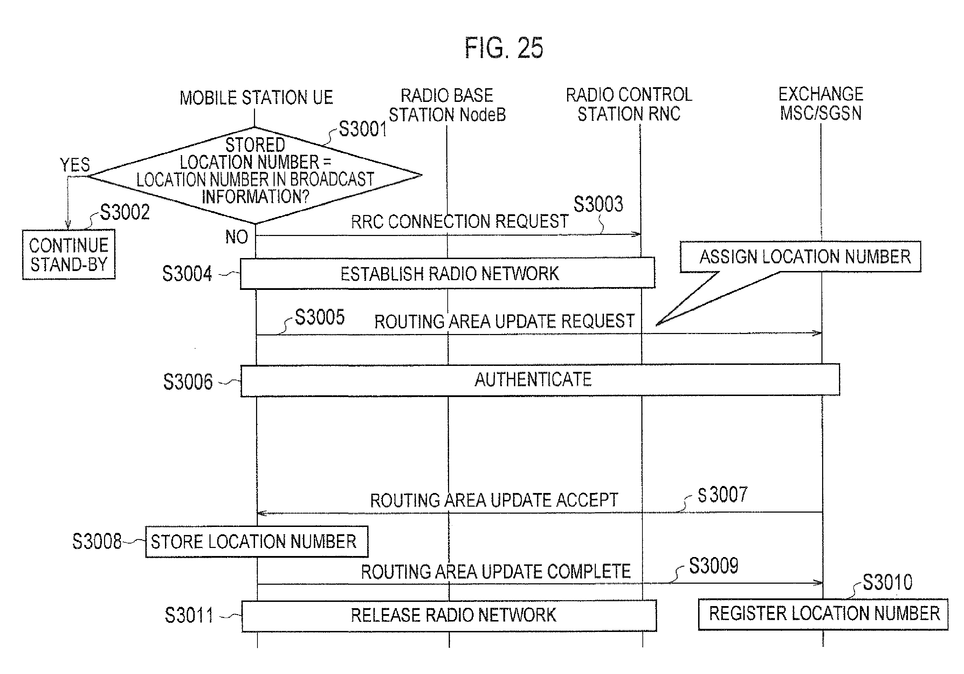

Referring to FIG. 25, operations of the location registration processing according to a conventional art is described.

In Step S3001, a mobile station UE compares a location number of a selected cell included in the notification information of the cell and a location number of a cell stored in the mobile station UE.

If the location numbers match, the mobile station UE ends the operation and continues stand by in the cell, in Step S3002.

On the other hand, if the location numbers do not match, the mobile station UE transmits to a radio control station RNC a "RRC Connection Request message" to establish a radio network with the radio control station RNC in Steps S3003 and S3004. Then, in Step S3005, the mobile station UE transmits to an exchange MSC/SGSN a "Routing Area Update Request message (location registration request)" to request the location registration processing for the selected cell.

Here, when transmitting the "Routing Area Update Request message (location registration request)" to the exchange MSC/SGSN, the radio control station RNC assigns a location number of the cell stored in the radio control station RNC.

Here, the location number of the cell assigned to the "Routing Area Update Request message (location registration request)" is identical with the location number of the cell included in the notification information of the cell described above.

Following the authentication processing of the mobile station UE in Step S3006, the mobile station UE receives, in Step S3007, from the exchange MSC/SGSN, a "Routing Area Update Accept message (location registration response)." Then, after storing the location number of the cell in Step 3008, the mobile station UE returns a "Routing Area Update Complete message (location registration completion response)" to the exchange MSC/SGSN in Step S3009, and releases the radio network with the radio control station RNC in Step S3011.

The exchange MSC/SGSN, which has received the "Routing Area Update Complete message (location registration completion response)," registers the location number of the cell by associating the location number with the mobile station UE in Step S3010.

The purpose of such location registration processing is to limit the number of cells to which a call signal is transmitted when a specific mobile station UE receives a call.

When a specific mobile station UE receives a call, the exchange MSC/SGSN and the radio control station RNC do not need to transmit a call signal to all cells in the mobile communication system, and should transmit the signal only to a group of cells corresponding to location numbers registered in association with the specific mobile station UE.

In a M-CDMA mobile communication system, a mobile station UE, which is in a communication state in a specific cell, is configured to measure reception power of the pilot signal at the cell and other neighboring cells and report such measurement result to a radio control station RNC periodically or at a timing based on periodical threshold determination result.

The radio control station RNC, which has received report of such measurement result, selects an optimum cell and notifies the radio base station NodeB and the mobile station USE of the selected cell to establish communication between the mobile station UE and the radio base station NodeB. Description of such cell selection algorithm at the radio control station RNC is omitted.

Furthermore, along with movements of the mobile station UE, the cell used for the communication can be changed during communication (handover).

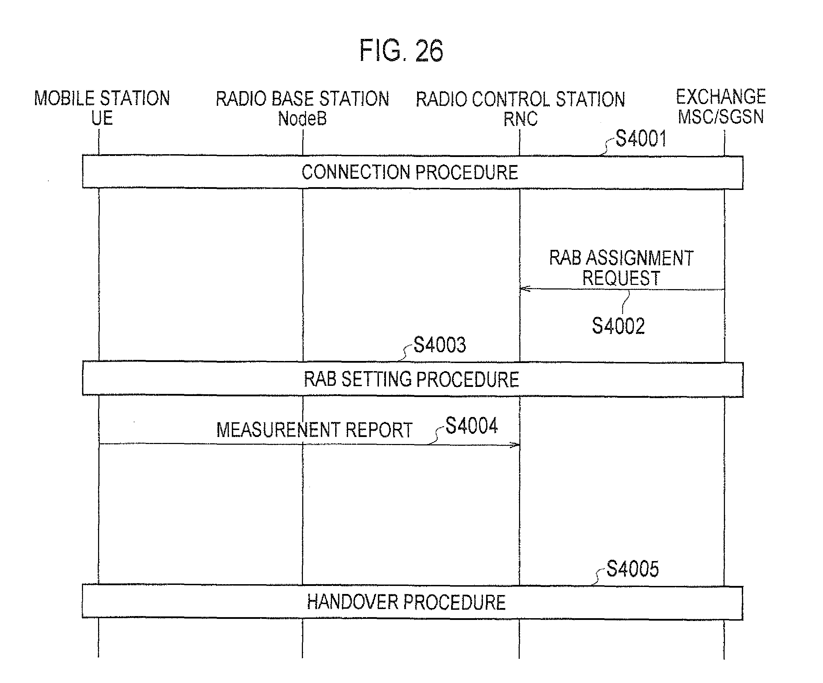

Referring to FIG. 26, the handover operation according to a conventional art is described.

Following the process for connecting the mobile station UE and the exchange MSC/SGSN in step S4001, the exchange MSC/SGSN transmits a "RAB Assignment message" for requesting establishment of the radio access bearer (RAB) to the radio control station RNC in Step S4002, and then the radio access bearer is established in Step S4003.

The radio control station RNC receives, in Step S4004, the measurement result reported from the mobile station UE periodically or at a timing based on the periodical threshold determination result. In Step S4005, the radio control station RNC selects an optimum cell on the basis of such measurement result and initiates the handover.

Meanwhile, in recent years, in addition to a radio base station Node for general-public covering an outdoor space, a microminiature radio base station (hereinafter, referred to as the femto radio base station) mainly covering indoor space is introduced actively as a kind of the radio base station Node.

Furthermore, "limited user services" such as application of a different billing system to a mobile station UE in a specific area and provision of additional functions in a unique private area are being reviewed. This is achieved by forming (with a single or plurality of cells) the unique private area for specific mobile stations UE (users) through minimizing the covering area and using an inexpensive home IP line available for connection with the radio control RNC with such femto radio base station installed in a standard home or small-size office.

In the conventional mobile communication system, even a cell under a femto radio base station providing such limited user services may be selected by an unspecified number of mobile stations UE and a radio control station RNC according to a predetermined selection algorithm based on the measurement result as described above to be accessed for the location registration processing or the handover.

Accordingly, in the conventional mobile communication system, an unspecified number of mobile stations UE are in a standby state or in a communication state even at a cell under a femto radio base station providing limited user services, wherefore there is a concern that service performance to specific mobile stations UE at the cell may degrade unintendedly due to congestion.

### DISCLOSURE OF THE INVENTION

Accordingly, the present invention is conceived to solve above problems. An object of the present invention is to provide a mobile communication system, a location registration method, a handover method, an exchange, a mobile station, and a radio control station, which are configured to avoid service degradation to a specific mobile station UE in a cell under a femto radio base station providing limited user services due to standby or communication of an unspecified number of mobile stations UE in the cell under the femto radio base station.

Another object of the present invention is to provide a mobile communication system, a location registration method, a handover method, an exchange, a mobile station, and a radio control station, which are configured to allow an unspecified number of mobile stations UE to stand by in or to be handed over to a cell under a femto radio base station according to setting by user or operators, so as to achieve flexible service and system operation.

A first aspect of the present invention is summarized as a mobile communication system configured to determine whether a location registration processing of a mobile station is allowed to a cell under a radio base station which is capable of being set to either an open state or a closed state,
wherein the location registration processing of the mobile station is allowed to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

In the first aspect, wherein the mobile communication system is configured to allow the location registration processing of all mobile stations to the cell under the radio base station, when the radio base station is set to the open state or when the radio base station is set to the closed state and manages the access list in which the specific information indicating all mobile stations is set as the information indicating the accessible mobile station.

In the first aspect, wherein the mobile communication system is configured :
to determine whether the radio base station is set to the open state or the closed state depending on information included in a location registration request for requesting the location registration processing of the mobile station; and, on the basis of a result of the determination, to determine whether the location registration processing of the mobile station is allowed to the cell under the radio base station.

In the first aspect, wherein the mobile Communication system is configured to notify the mobile station of information on a cell in which the location registration processing should be performed when the location registration processing of the mobile station to the cell under the radio base station has been rejected.

A second aspect of the present invention is summarized as a mobile communication system configured to determine whether a handover of a mobile station is allowed to a cell under a radio base station which is capable of being set to either an open state or a closed state, wherein the handover of the mobile station is allowed to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

In the second aspect, wherein the mobile communication system is configured to allow the handover of all mobile stations to the cell under the radio base station, when the radio base station is set to the open state or when the radio base station is set to the closed state and manages the access list in which the specific information indicating all mobile stations is set as the information indicating the accessible mobile station.

A third aspect of the present invention is summarized as a location registration method in which whether a location registration processing of a mobile station is allowed to a cell under a radio base station which is capable of being set to either an open state or closed state is determined, wherein the location registration processing of the mobile station is allowed to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

A fourth aspect of the present invention is summarized as a handover method in which whether a handover of a mobile station is allowed to a cell under a radio base station which is capable of being set to either an open state or closed state is determined, wherein the handover of the mobile station is allowed to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

A fifth aspect of the present invention is summarized as an exchange configured to determine whether a location registration processing of a mobile station is allowed to a cell under a radio base station which is capable of being set to either an open state or a closed state, wherein the location registration processing of the mobile station is allowed to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

In the fifth aspect, wherein the exchange is configured to allow the location registration processing of all mobile stations to the cell under the radio base station, when the radio base station is set to the open state or when the radio base station is set to the closed state and manages the access list in which the specific information indicating all mobile stations is set as the information indicating the accessible mobile station.

In the fifth aspect, wherein the exchange is configured to determine whether the radio base station is set to the open state or the closed state depending on information included in a location registration request for requesting the location registration processing of the mobile station; and, on the basis of a result of the determination, to determine whether the location registration processing of the mobile station is allowed to the cell under the radio base station.

In the fifth aspect, a mobile station used in a mobile communication system configured to determine whether the location registration processing of the mobile station is allowed to a cell under a radio base station which is capable of being set to either an open state or a closed state, wherein a location registration request for requesting the location registration processing of the mobile station is transmitted to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

In the fifth aspect, a radio control station configured to determine whether a handover of a mobile station is allowed to a cell under a radio base station which is capable of being set to either an open state or a closed state, wherein the handover of the mobile station is allowed to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

In the fifth aspect, the radio control station configured to allow the handover of all mobile stations to the cell under the radio base station, when the radio base station is set to the open state or when the radio base station is set to the closed state and manages the access list in which the specific information indicating all mobile stations is set as the information indicating the accessible mobile station.

In the fifth aspect, wherein the exchange is configured to change a cause included in a negative location registration response, depending on the number of rejections of the location registration processing of the mobile station to the cell under the radio base station, the negative location registration response notifying that the location registration processing of the mobile station to the cell under the radio base station has been rejected.

A sixth aspect of the present invention is summarized as, wherein the exchange is configured to include, in the location registration response, a cause other than a cause indicating that the location registration processing of the mobile station is not allowed when the number of rejections is less than a predetermined number of times.

A seventh aspect of the present invention is summarized as, wherein the exchange is configured to include, in the location registration response, the cause indicating that the location registration processing of the mobile station is not allowed, when the number of rejections reaches a predetermined number of times.

In the seventh aspect, wherein the exchange is configured to allow the location registration processing of the mobile station to the cell under the radio base station, when the number of rejections reaches a predetermined number of times.

A eighth aspect of the present invention is summarized as, a radio base station configured to determine whether a location registration processing of a mobile station is allowed to a cell under a radio base station which is capable of being set to an open state or a closed state, wherein the location registration processing to the cell under the radio base station is allowed, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

In the eighth aspect, wherein the radio base station is configured to allow the location registration processing of all mobile stations to cells under the radio base station, when the radio base station is set to the open state or when the radio base station is set to the closed state and manages the access list in which the specific information indicating all mobile stations is set as the information indicating the accessible mobile station.

A ninth aspect of the present invention is summarized as, a concentrator configured to determine whether a location registration processing of a mobile station is allowed to a cell under a radio base station which is capable of being set to either an open state or a closed state, wherein the location registration processing of the mobile station is allowed to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

In the ninth aspect, wherein the concentrator is configured to allow the location registration processing of all mobile stations to the cell under the radio base station, when the radio base station is set to the open state or when the radio base station is set to the closed state and manages the access list in which the specific information indicating all mobile stations is set as the information indicating the accessible mobile station.

In the ninth aspect, wherein the concentrator is configured: to determine whether the radio base station is set to the open state or the closed state depending on information included in a location registration request for requesting the location registration processing of the mobile station; and, on the basis of a result of the determination, to determine whether the location registration processing of the mobile station is allowed to the cell under the radio base station.

A tenth aspect of the present invention is summarized as, a radio control station configured to determine whether a location registration processing of a mobile station is allowed to a cell under a radio base station which is capable of being set to either an open state or a closed state, wherein the location registration processing of the mobile station is allowed to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

In the tenth aspect, wherein the radio control station is configured to allow the location registration processing of all mobile stations to the cell under the radio base station, when the radio base station is set to the open state or when the radio base station is set to the closed state and manages the access list in which the specific information indicating all mobile stations is set as the information indicating the accessible mobile station.

In the tenth aspect, wherein the radio control station is configured to determine whether the radio base station is set to the open state or the closed state depending on information included in a location registration request for requesting the location registration processing of the mobile station; and, on the basis of a result of the determination, to determine whether the location registration processing of the mobile station is allowed to the cell under the radio base station.

A eleventh aspect of the present invention is summarized as, a radio base station configured to determine whether a handover of a mobile station is allowed to a cell under a radio base station which is capable of being set to an open state or a closed state, wherein the handover to the cell under the radio base station is allowed, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

In the eleventh aspect, wherein the radio base station is configured to allow the handover of all mobile stations to cells under the radio base station, when the radio base station is set to the open state or when the radio base station is set to the closed state and manages the access list in which the specific information indicating all mobile stations is set as the information indicating the accessible mobile station.

A twelfth aspect of the present invention is summarized as, a concentrator configured to determine whether a handover of a mobile station is allowed to a cell under a radio base station which is capable of being set to either an open state or a closed state, wherein the handover of the mobile station is allowed to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

In the twelfth aspect, wherein the concentrator is configured to allow the handover of all mobile stations to the cell under the radio base station, when the radio base station is set to the open state or when the radio base station is set to the closed state and manages the access list in which the specific information indicating all mobile stations is set as the information indicating the accessible mobile station.

### BRIEF DESCRIPTION OF THE DRAWINGS

[FIG. 1] FIG. 1 is an overall configurational view of a mobile communication system according to a first embodiment of the present invention.
[FIG. 2] FIG. 2 is a functional block diagram of an exchange according to the first embodiment of the present invention.
[FIG. 3] FIG. 3 is a drawing showing one example of cell information managed by a cell information manager of the exchange according to the first embodiment of the present invention.
[FIG. 4] FIG. 4 is a drawing showing one example of an access list managed by an access list manager of the exchange according to the first embodiment of the present invention.
[FIG. 5] FIG. 5 is a sequence diagram showing operations of a location registration processing in the mobile communication system according to the first embodiment of the present invention.
[FIG. 6] FIG. 6 is a flow chart showing operations of the exchange during the location registration processing in the mobile communication system according to the first embodiment of the present invention.
[FIG. 7] FIG. 7 is a functional block diagram of a mobile station according to a second embodiment of the present invention.
[FIG. 8] FIG. 8 is a flow chart showing operations of the mobile station during a location registration processing in a mobile communication system according to the second embodiment of the present invention.
[FIG. 9] FIG. 9 is a functional block diagram of an exchange according to a third embodiment of the present invention.
[FIG. 10] FIG. 10 is a functional block diagram of a radio control station according to the third embodiment of the present invention.
[FIG. 11] FIG. 11 is a sequence diagram showing operations during a handover processing in a mobile communication system according to the third embodiment of the present invention.
[FIG. 12] FIG. 12 is a sequence diagram showing operations of the radio control station during the handover processing in the mobile communication system according to the third embodiment of the present invention.
[FIG. 13] FIG. 13 is a flow chart illustrating operations of an exchange according to Modified Embodiment 1.
[FIG. 14] FIG. 14 is a flow chart illustrating operations of the exchange according to Modified Embodiment 1.
[FIG. 15] FIG. 15 is a flow chart illustrating operations of a mobile station according to Modified Embodiment 1.
[FIG. 16] FIG. 16 is an overall configurational view of a mobile communication system according to Modified Embodiment 2.
[FIG. 17] FIG. 17 is a functional block diagram of a concentrator according to Modified Embodiment 2.
[FIG. 18] FIG. 18 is a sequence diagram showing operations during a location registration processing in the mobile communication system according to Modified Embodiment 2.
[FIG. 19] FIG. 19 is an overall configurational view of a mobile communication system according to Modified Embodiment 3.
[FIG. 20] FIG. 20 is a functional block diagram of a femto radio base station according to Modified Embodiment 3.
[FIG. 21] FIG. 21 is a sequence diagram showing operations during a location registration processing in the mobile communication system according to Modified Embodiment 3.
[FIG. 22] FIG. 22 is a functional block diagram of a radio control station according to Modified Embodiment 4.
[FIG. 23] FIG. 23 is a sequence diagram showing operations during a location registration processing in a mobile communication system according to Modified Embodiment 4.
[FIG. 24] FIG. 24 is an overall configurational view of a common W-CDMA mobile communication system.
[FIG. 25] FIG. 25 is a sequence diagram showing operations during a location registration processing in the common W-CDMA mobile communication system.
[FIG. 26] FIG. 26 is a sequence diagram showing operations during a handover processing in the common W-CDMA mobile communication, system.

### BEST MODES FOR CARRYING OUT THE INVENTION

### (Configuration of Mobile Communication System According to First Embodiment of the Present Invention)

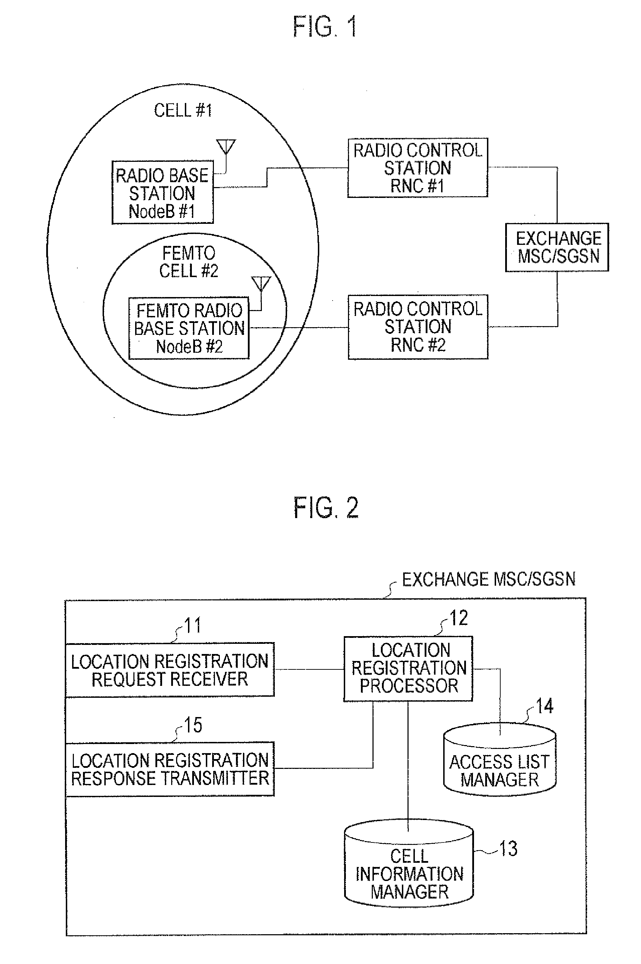

Referring to FIG. 1 to FIG. 4, configuration of a mobile communication system according to a first embodiment of the present invention is described.

As shown in FIG. 1, the mobile communication system according to this embodiment includes a radio base station NodeB #1, a femto radio base station NodeB #2, a radio control station RNC #1 connected to the radio base station NodeB #1, a radio control station RNC #2 connected to the femto radio base station NodeB #2, and an exchange MSC/SGSN connected to the radio control station RNC #1, and the radio control station RNC #2.

Here, the radio base station NodeB #1 is assumed to be installed by a telecommunications carrier, or the like and is a radio base station for general public covering a cell #1 in an indoor space.

Furthermore, the femto radio base station NodeB #2 is assumed to be installed in a standard home or small-size office by a general user, a telecommunications carrier, or the like and is a microminiature radio base station mainly covering a femto cell #2 in an outdoor space.

Meanwhile, the femto radio base station B #2 and the radio control station RNC #2 may be configured to be connected via an inexpensive home IP network line.

Furthermore, the femto radio base station NodeB #2 may be configured to provide "limited user services" to specific mobile stations UE which are accessible to the femto radio base station NodeB #2.

Here, the "limited user services" are assumed to include the provision of a billing system in the femto cell #2 which is different from a billing system in the cell #1 and the provision of additional functions only available in the femto cell #2.

Furthermore, the mobile communication system according to this embodiment is configured to determine whether the location registration processing of the mobile station is allowed to a cell under a radio base station NodeB which is capable of being set to either an open state or a closed state.

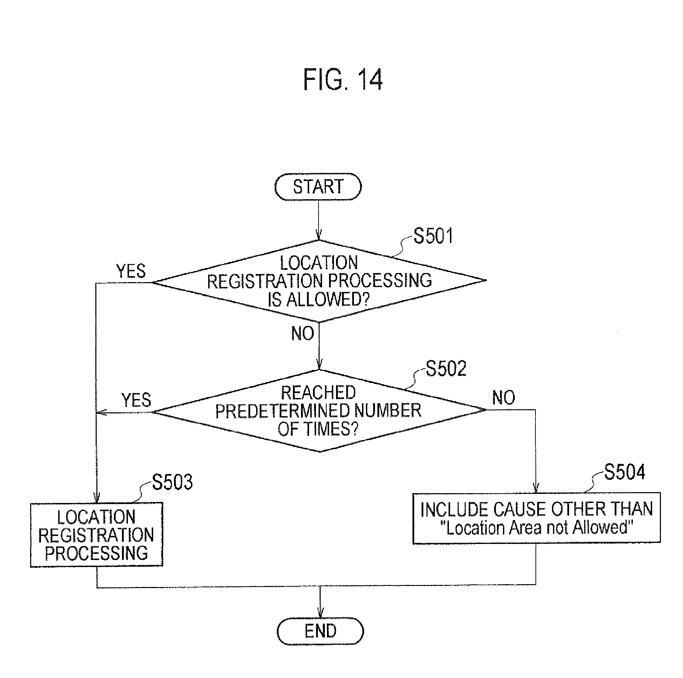

Furthermore, similarly with the configuration shown in FIG. 14 described above, although in general, a plurality of exchanges MSC/SGSN exist and are connected to each other, in the example shown in FIG. 1, only one exchange is shown for the sake of simplicity.

Furthermore, also in such mobile communication system, a device called a home memory to store subscriber information is generally disposed in addition to the exchange MSC/SGSN. In the example shown in FIG. 1, however, function of the home memory is assumed to be included in the exchange MSC/SGSN, for the sake of simplicity.

As shown in FIG. 2, the exchange MSC/SGSN according to this embodiment includes a location registration request receiver 11, a location registration processor 12, a cell information manager 13, an access list manager 14, and a location information registration response transmitter 15.

The location registration request receiver 11 is configured to receive a "Routing Area Update Request message (location registration request)" transmitted from the mobile station UE.

The location registration processor 12 is configured to perform the location registration processing of the mobile station UE to a cell under a radio base station NodeB designated by the "Routing Area Update Request Message (location registration request) " received by the location registration request receiver 11.

Meanwhile, if the femto cell #2 under the femto radio base station NodeB #2 is designated by the above "Routing Area Update Request message (location registration request) , " the location registration processor 12 is configured to determine, by referring to the cell information manager 13 and the access list manager 14, whether the location registration processing of the mobile station UE is allowed to the femto cell #2 under the femto radio base station NodeB #2.

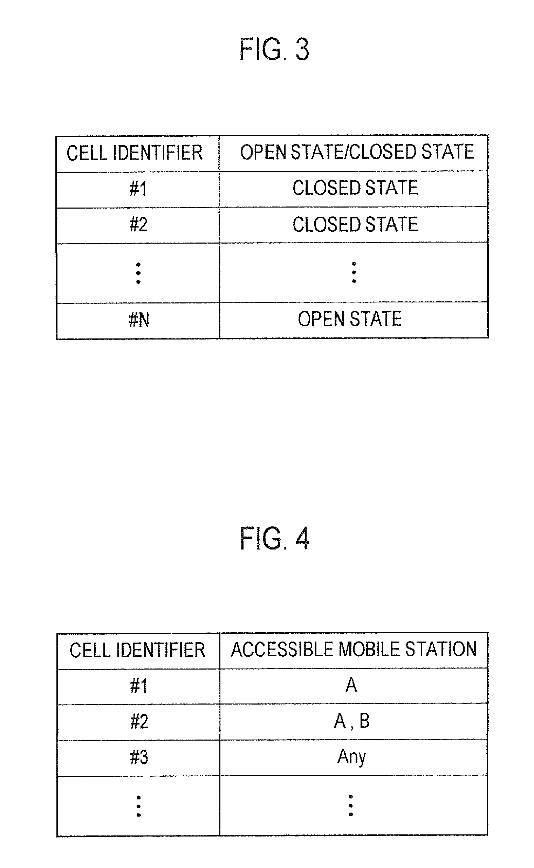

The cell information manager 13 is configured to store the "cell identifier" and the "state" by associating them with each other as shown in FIG.3.

The "cell identifier" is an identifier to identify respective cells, whereas the "state" is information showing whether a radio base station NodeB to which respective cells belong is set to the open state or the closed state.

Here, for example, the femto radio base station NodeB #2 may be configured so that the femto radio base station NodeB #2 can be set to the open state by a telecommunications carrier, but not by a general user.

Furthermore, the access list manager 14 is configured to manage an access list for setting mobile stations accessible to respective cells. As shown in Fig. 4, for example, the access list manager 14 is configured to store the access list associating the "cell identifier" and the "accessible mobile station" with each other.

The "accessible mobile station" may be information showing the mobile station which can access (can perform the location registration processing) to a cell identified by the "cell identifier."

Meanwhile, the "accessible mobile station" may be information showing all mobile stations ("Any") and not a specific mobile station (for example, "A" or "B") . Also, the "accessible mobile station" may be information showing a class formed by one or more mobile stations.

Specifically, the location registration processor 12 is configured to allow the location registration processing of the mobile station UE to a cell under a radio base station NodeB, in any one of the following cases.

(1) The radio base station NodeB is set to the open state.

(2) The radio base station NodeB is set to the closed state and manages an access list in which the mobile station UE is set as an accessible mobile station.

(3) The radio base station NodeB is set to the closed state and manages an access list in which specific information showing all mobile stations ("Any") is set as information indicating accessible mobile stations.

In the cases (1) and (3), the location registration processor 12 is configure to allow the location registration processing of all mobile stations to the cell under the radio base station NodeB.

As described above, a general user cannot set the femto radio base station NodeB #2 to the open state, but location registration processing of all mobile stations to the femto cell #2 under the femto radio base station NodeB #2 can be allowed by setting "Any" to the access list.

Furthermore, the location registration processor 12 may be configured to determine, according to information included in a "Routing Area Update Request message (location registration request)" requesting the location registration processing of the mobile station UE, whether the radio base station NodeB is in the open state or in the closed state, and then further determine whether the location registration processing of the mobile station UE is allowed to the cell under the radio base station NodeB on the basis of such determination result.

The location registration response transmitter 15 is configured to transmit to the mobile station UE a "Routing Area Update Reject message (negative location registration response)" or a "Routing Area Update Accept message (positive location registration response)" to the mobile station UE, according to the result of the location registration processing of the mobile station UE by the location registration processor 12.

### (Operations of Mobile Communication System According to First Embodiment of the Present Invention)

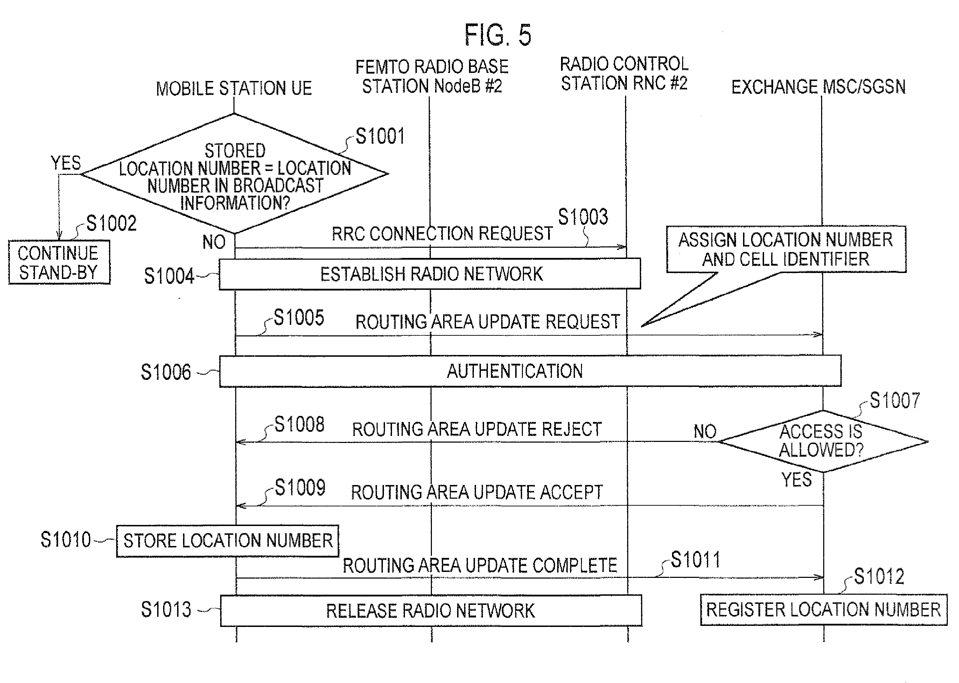

Referring to FIG.5, operations in the mobile communication system according to the first embodiment of the present invention are described. In the process, a mobile station UE that has performed a location registration processing to a cell #1 under a radio base station NodeB #1 performs a location registration processing to a femto cell #2 under a femto radio base station NodeB #2.

As shown in FIG. 5, in Step S1001, the mobile station UE compares a location number (an identifier of a paging area to which the femto cell #2 belongs) of a cell (femto cell #2) included in notification information on a cell corresponding to an optimum pilot signal and a location number (an identifier of a paging area to which the cell #1 belongs) of a cell (cell #1) stored in the mobile station UE.

If the location numbers match, the mobile station UE ends the operation and continues, in Step S1002, to stand by in the cell #1 in which location registration processing has been performed (in the standby state) .

If the location numbers do not match in Steps S1003 and S1004, the mobile station UE transmits, to the remote control station RNC #2 an "RRC Connection Request message" and establishes a radio network with the radio control station RNC #2, and, in Step S1005, transmits to the exchange MSC/SGSN a "Routing Area Update Request message (location registration request)" to request the location registration processing to the femto cell #2.

Here, the radio control station RNC #2 assigns the location number and the cell identifier included in the above-described notification information of the femto cell #2 to the "Routing Area Update Request message (location registration request)" transmitted to the exchange MSC/SGSN.

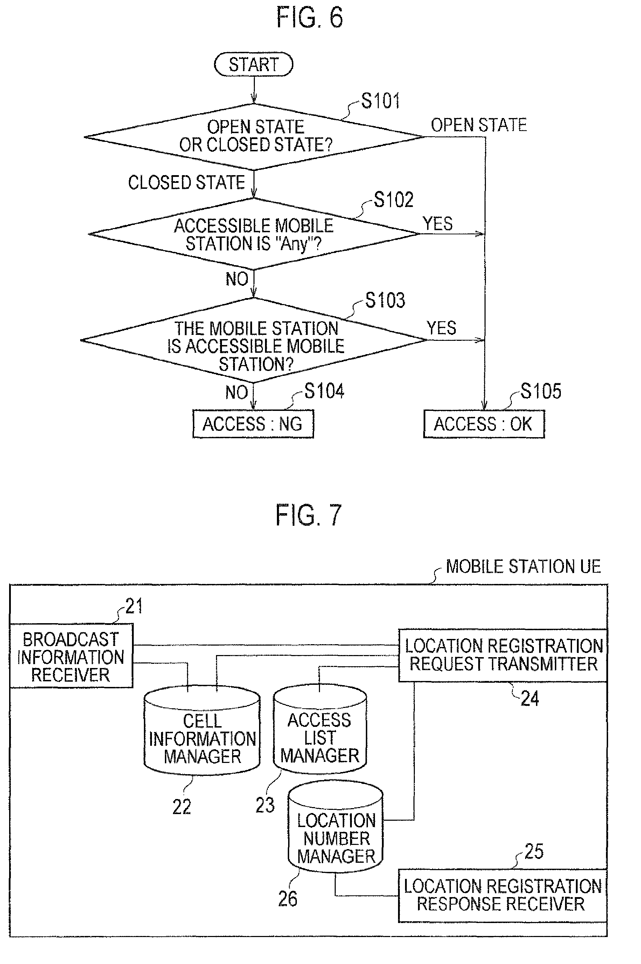

Following the authentication of the mobile station UE in Step S1006, the exchange MSC/SGSN determines, in Step S1007, whether the location registration processing of the mobile station UE to the femto cell #2 should be allowed. Hereinafter, such determination method is described referring to FIG. 6.

As shown In FIG. 6, in Step 101, the exchange MSC/SGSN determines whether the femto radio base station NodeB #2 is set to the open state or to the closed state.

If the exchange MSC/SGSN determines that femto radio base station NodeB #2 is set to the open state, the exchange MSC/SGSN determines, in Step S105, that the location registration processing of the mobile station UE to the femto cell #2 should be allowed.

On the other hand, if the exchange MSC/SGSN determines that the femto radio base station NodeB #2 is set to the closed state, the exchange MSC/SGSN determines, in Step S102, whether "Any" is set in the access list.

If the exchange MSC/SGSN has determined that "Any" is et in the access list, the exchange MSC/SGSN determines, in Step S105, that the location registration processing of the mobile station UE to the femto cell #2 should be allowed.

On the other hand, if the exchange MSC/SGSN has determined that "Any" is not set in the access list, the exchange MSC/SGSN determines, in Step S103, whether information indicating the mobile station UE (identifier of the mobile station UE, the class to which the mobile station UE belongs to, or the like) is set in the access list.

If the exchange MSC/SGSN has determined that information indicating the mobile station UE is set, the exchange MSC/SGSN determines, in Step S105, that the location registration processing of the mobile station UE to the femto cell #2 should be allowed.

If the exchange MSC/SGSN has determined that information indicating the mobile station UE is not set, the exchange MSC/SGSN determines, in Step S104, that the location registration processing of the mobile station UE to the femto cell #2 should be rejected.

If a "femto designation identifier" indicating whether a radio base station of a cell to which a mobile station UE performs the location registration processing is a femto radio base station is assigned to the "Routing Area Update Request message (location registration request)," processing load on the exchange MSC/SGSN can be alleviated by omitting the processing of Step S1007 when the location registration processing of the mobile station UE to a radio base station other than the femto radio base station is requested.

Back to FIG. 5, the exchange MSC/SGSN may be configured to transmit, in Step S1008, to the mobile station UE a "Routing Area Update Reject Message (negative location registration request) " indicating the determination result when the exchange MSC/SGSN has determined that the location registration processing of the mobile station UE to the femto cell #2 should be rejected.

Here, the exchange MSC/SGSN may be configured to notify the mobile station UE of the information on a cell (frequency, cell identifier, or the like) to which the location registration processing should be performed when the exchange MSC/SGSN has determined that the location registration processing of the mobile UE to the femto cell #2 should be rejected.

Furthermore, the exchange MSC/SGSN may be configured to notify, when the radio control station RNC#2 is releasing the network, the mobile station of the information on a cell (frequency, cell identifier, or the like) to which the location registration processing should be performed using an "RRC Connection Release message (radio network release command)" when the exchange MSC/SGSN has determined that the location registration processing of the mobile station UE to the femto cell #2 should be rejected.

In such case, the exchange MSC/SCSN may be configured to transmit to the radio control station RNC #2 a "radio access bearer release commend" including information on such cell.

On the other hand, when the exchange MSC/SGSN has determined that the location registration processing of the mobile station UE to the femto cell #2 should be allowed, the exchange MSC/SGSN transmits to the mobile station UE a "Routing Area Update Accept Message (positive location registration response)" indicating the determination result.

The mobile station UE, which has receive from the exchange MSC/SGSN the "Routing Area Update Accept message (positive location registration response)," stores, in Step S1010, a location number designated by the received ""Routing Area Update Accept message (positive location registration response)." Then, in Step S1011, the mobile station UE returns to a "Routing Area Update Complete message (location registration completion response) the exchange MSC/SGSN." Then, in Step S1013, the mobile station UE releases the radio network with the radio control station RNC.

The exchange MSC/SGSN, which has received the "Routing Area Update Complete message (location registration completion response)," registers, in Step S1012, the location number designated by the received "Routing Area Update Complete message (location registration completion response)" by associating the location number with the mobile station UE.

### (Advantageous Effects of Mobile Communication System According to First Embodiment of the Present Invention)

In the mobile communication system according to the first embodiment of the present invention, service degradation to a specific mobile station UE in the femto cell #2 due to standby of an unspecified number of mobile stations at the femto cell #2 can be avoided even if the mobile station UE cannot autonomously determine whether the location registration processing to the femto radio base station NodeB #2 is allowed.

Furthermore, in the mobile communication system according to the first embodiment of the present invention, an unspecified number of mobile stations can stand by in the femto cell #2 depending on the setting by a user or telecommunications carrier, so that flexible service provision and system operation is available.

Furthermore, in the mobile communication system according to the first embodiment of the present invention, unnecessary access determination at the cell #1 other than the femto cell #2 (determination of whether the location registration processing is allowed) may be omitted, so that processing load on the exchange MSC/SGSN can be alleviated.

Furthermore, in the mobile communication system according to the first embodiment of the present invention, information on a cell in which a mobile station should stand by is transmitted to a mobile station of which the location registration processing to the femto cell #2 is rejected, to guide the mobile station to stand by at a desired cell, so that flexible system operation by a telecommunications carrier is available.

### (A mobile Communication System According to Second Embodiment of the Present Invention)

Referring to FIG. 7 to FIG. 9, a mobile communication system according to a second embodiment of the present invention is described. Hereinafter, the mobile communication system according to this embodiment is described by focusing on its differences from the mobile communication system according to the first embodiment described above.

In the mobile communication system according to this embodiment, the mobile station UE is configured to autonomously determine whether the location registration processing of the mobile station UE is allowed to a cell under a radio base station NodeB that can be set to either an open state or a closed state.

As shown in FIG. 7, the mobile station UE according to this embodiment includes a notification information receiver 21, a cell information manager 22, an access list manager 23, a location registration request transmitter 24, a location information registration response receiver 25, and a location number manager 26.

The notification information receiver 21 is configured to receive notification information of a cell corresponding to an optimum pilot signal.

The cell information manager 22 is configured to manage a "cell identifier" and a "state" by associating them with each other, similarly with the cell information manager 13 shown in FIG. 3.

The access list manager 23 is configured to store an access list which associates the "cell identifier" and the "accessible mobile station" with each other, similarly with the access list manager 14 shown in FIG. 4.

The location registration request transmitter 24 is configured to transmit to an exchange MSC/SGSN a "Routing Area Update Request message (location registration request)" to request the location registration processing to a cell under a radio base station NodeB which is set to the open state, or to a cell under a radio base station NodeB which is set to the closed state and manages an access list in which the mobile station UE is set as an "accessible mobile station," by referring to the cell information manager 22 and the access list manager 23.

The location information registration response receiver 25 is configured to receive a "Routing Area Update Reject message (negative location registration response)" or a "Routing Area Update Accept message (positive location registration response)" transmitted from the exchange MSC/SGSN.

The location number manager 26 is configured to manage a location number of a cell designated by a "Routing Area Update Accept message (positive location registration response)" as a location number (an identifier of a paging area) to which the location of the mobile station UE is registered.

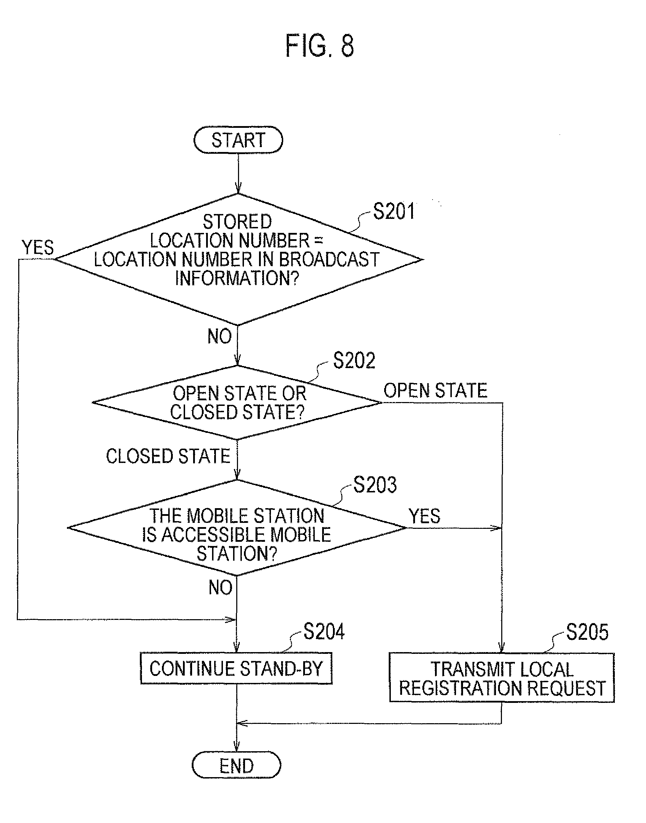

Next, referring to FIG. 8, operations in the mobile communication system according to the second embodiment of the present invention are described. In the process, the mobile station UE that has performed a location registration processing to a cell #1 under a radio base station NodeB #1 performs a location registration processing to a femto cell #2 under a femto radio base station NodeB #2.

As shown in FIG. 8, in Step 201, the mobile station UE compares a location number (an identifier of a paging area to which the femto cell #2 belongs) of a cell (femto cell #2) in which the notification information of a cell corresponding to an optimum pilot signal is included, and a location number (an identifier of a paging area to which a cell #1 belongs) of a cell (cell #1) which is stored in the mobile station UP.

If the location numbers match, the mobile station UE continues stand by, in Step S204, in the cell #1 in which the mobile station UE has performed the location registration processing (standing by) and ends the operation.

If the location numbers do not match, the mobile station determines, in Step S202, whether the femto radio base station NodeB #2 is set to the open state or the closed state.

If the mobile station UE determines that the radio base station Node #2 is set to the open state, the mobile station UE determines, in Step S208, that the location registration processing of the mobile station UP to the femto cell #2 should be allowed, and then transmits to the exchange MSC/SGSN a "Routing Area Update Request message (location registration request)."

On the other hand, if the mobile station UE has determined that the radio base station NodeB #2 is set to the closed state, the mobile station UE determines, in Step S203, whether information indicating the mobile station UE as an "accessible mobile station" for the femto cell #2 (an identifier of the mobile station UE, a class to which the mobile station UE belongs, or the like) is set in the access list.

If the mobile station UE has determined that the information indicating that the mobile station UE is set, the mobile station UE determines, in Step S205, that the location registration processing of the mobile station UE to the femto cell #2 should be allowed, and transmits to the exchange MSC/SGSN a "Routing Area Update Request message (location registration request)."

On the other hand, if the mobile station UE has determined that the information indicating the mobile station UE is not set, the mobile station UE continues, in Step S204, to stand by in a cell in which the mobile station UE has performed the location registration processing (standing by), and ends the operation.

Furthermore, if the mobile station UE is aware that the radio base station to which the above cell belongs is a radio base station other than the femto radio base station, the mobile station omits the operation in Step S202 shown in FIG. 8 and determines that all radio base stations are set to the open state, in order to alleviate processing load.

Meanwhile, operations of the mobile station UE after transmitting to the exchange MSC/SGSN the "Routing Area Update Request message (location registration request)" are same as such operations shown in FIG. 5 except for Steps S1007 and S1008.

In the mobile communication system according to the second embodiment of the present invention, the mobile station UE can autonomously determine whether the location registration to the femto radio base station NodeB #2 is allowed, so that service degradation of a specific mobile station UE due to stand-by of an unspecified number of mobile stations in the femto cell #2 can be avoided.

Furthermore, in the mobile communication system according to the second embodiment of the present invention, stand-by of an unspecified number of mobile stations in the femto cell #2 can be allowed depending on the setting by user or telecommunications carrier, so that flexible service provision and system operation is available.

### (A mobile Communication System According to Third Embodiment of the Present Invention)

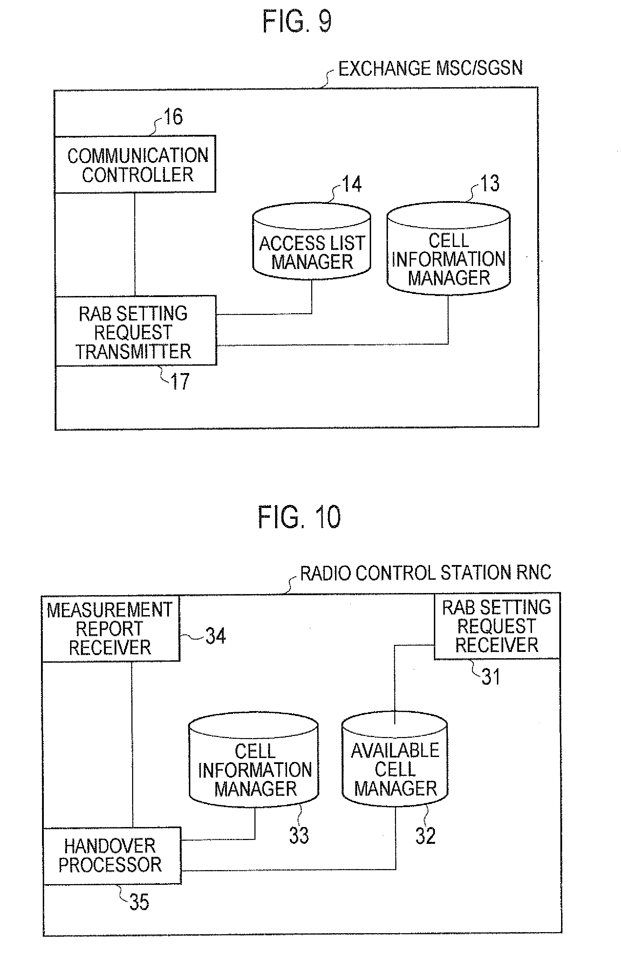

Referring to FIG. 10 to FIG. 12, a mobile communication system according to a third embodiment of the present invention is described. Hereinafter, the mobile communication system according to this embodiment is described by focusing on its differences from the mobile communication system of the first embodiment described above.

The mobile communication system according to the third embodiment of the present invention is configured to determine whether a handover of a mobile station UE is allowed to a cell under a radio base station NodeB which can be set to either the open state or the closed state.

As shown in FIG. 9, an exchange MSC/SGSN includes a cell information manager 13, an access list manager 14, a communication controller 16, and a RAB setting request transmitter 17.

The communication controller 16 is configured to control communication by a mobile station UE via a radio base station NodeB and a radio control station RNC.

The RAB setting request transmitter 17 is configured to transmit to the radio control station RNC a "RAB Assignment Request message (radio access bearer setting request)" upon receiving a connection establish request from the mobile station UE.

Here, the RAB setting request transmitter 17 is configured to extract a cell identifier which identifies a cell to which the mobile station UE is accessible (that is, a cell which the mobile station UE can select as a handover candidate) and notify the radio control station RNC by transmitting the "RAB Assignment Request message (radio access bearer setting request)."

Specifically, the RAB setting request transmitter 17 is configured to input the information indicating the mobile station UE (for example, "A") to the access list manager 14 and then acquire a cell identifier (for example, "#1" to "#3") extracted by reverse lookup of the access list shown in FIG. 4.

Here, since "Any" is the information indicating all mobile stations in the access list shown in FIG. 4, the cell identifier "#3" is always returned even if the information indicating any mobile station is entered.

As shown in FIG. 10, the radio control station RNC according to this embodiment includes a RAB setting request receiver 31, an available cell manager 32, a cell information manager 33, a measurement report receiver 34, and a handover processor 35.

The RAB setting request receiver 31 is configured to receive the "RAB Assignment Request message (radio access bearer setting request)" transmitted from the exchange MSC/SGSN.

Furthermore, the RAB setting request receiver 31 is configured to store into the available cell manager 33 the cell identifier which identifies a cell to which the mobile station is accessible (that is, a cell which the mobile station UE can select as a handover candidate) notifies by the received "RAB Assignment Request message (radio access bearer setting request)."

Furthermore, the RAB setting request receiver 31 is configured to establish a radio access bearer between the mobile station UE and the exchange MSC/SGSN depending on the received "RAB Assignment Request message (radio access bearer setting request)."

The measurement report receiver 34 is configured to receive the ""Measurement Report message (measurement report)" transmitted from the mobile station UE.

The handover processor 35 is configured to determine whether the mobile station UE should be handed over to a specific cell depending on the "Measurement Report message (measurement report)" received by the measurement report receiver 34.

Here, the handover processor 35 is configured to determine whether the handover of the mobile station UE to a specific cell is allowed by referring to the available cell manager 32 and the cell information manager 33 when the handover processor 35 determines that the mobile station UE should be handed over to the specific cell.

Even when the handover processor 35 determines that the mobile station UE should be handed over to the specific cell, the hanover processor 35 is configured to refer to the available cell manager 32 and the cell information manager 33 and, when the handover processor 35 determines that the handover of the mobile station UE to a specific cell is rejected, discard such measurement result and not perform the handover processing.

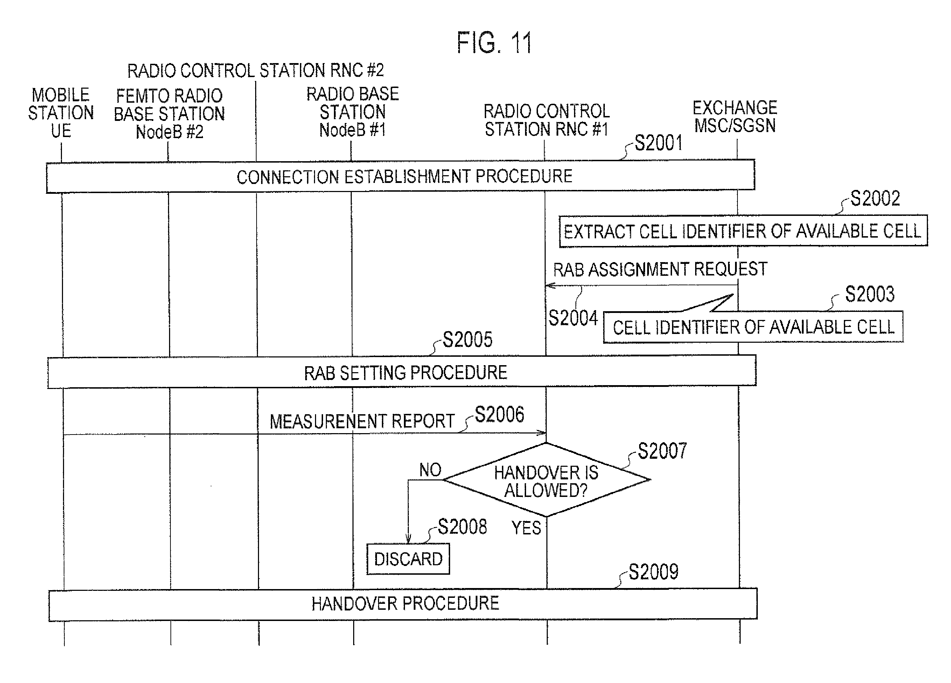

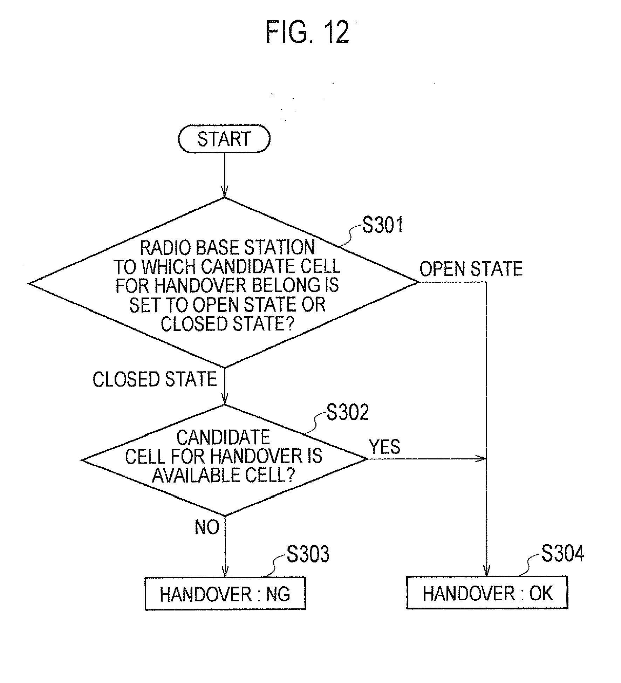

Next, referring to FIG. 11 and FIG. 12, operations in the mobile communication system according to the third embodiment of the present invention are described. In the process, the mobile station UE communicating via a cell #1 under the radio base station NodeB #1 performs handover processing to a femto cell # 2 under a femto radio base station NodeB #2.

As shown in FIG. 11, in Step S2001, the connection establishment procedure is performed between the mobile station UE and the exchange MSC/SGSN via the radio base station NodeB #1 and the radio control station RNC #1.

In Step S2002, the exchange MSC/SGSN extracts a cell identifier identifying a cell to which the mobile station UE identifies is accessible.

In Step S2003, the exchange MSC/SGSN assigns the extracted cell identifier to the "RAB Assignment Request message (radio access bearer setting request)," and, in Step S2004, transmits to the radio control station RNC #1 such "RAB Assignment Request message (radio access bearer setting request)."

In Step S2005, the radio access bearer setting procedure is performed between the mobile station UE and the exchange MSC/SGSN via the radio base station NodeB #1 and the radio control station RNC #1.

After setting the radio access bearer described above, the mobile station UE transmits to the radio control station RNC #1 a "Measurement Report message (measurement report)" in Step S2006.

In Step S2007, the radio control station RNC #1, which has received the "Measurement Report message (measurement report)," selects a candidate cell for the handover.

In the example shown in Fig. 11, the radio control station RNC #1 selects the femto cell #2 under the femto radio base station NodeB #2 as a candidate cell for handing over the mobile station UE which is communicating via the cell #1 under the radio base station NodeB #1.

Then, the radio control station RNC #1 determines whether the mobile station UE should be handed over to the femto cell #2 selected as a candidate cell for the handover. Hereinafter, such determination method is described referring to FIG. 12.

As shown in FIG. 12, the radio control station RNC #1 determines, in Step S301, whether the femto radio base station NodeB #2 to which the femto cell #2 selected as a candidate cell for the handover belongs is set to the open state or the closed state.

If the radio control station RNC #1 determines that the femto radio base station Nodes #2 is set to the open state, the radio control station RNC #1 determines, in Step S304, that the handover of the mobile station UE to the femto cell #2 should be allowed.

On the other hand, if the radio control station RNC #1 determines that the femto radio base station NodeB #2 is set to the closed state, the radio control station RNC #1 determines, in Step S302, whether the femto cell #2 is managed as an available cell for the mobile station UE, referring to the available cell manager 32.

If the radio control station RNC #1 determines that the femto cell #2 is an available cell for the mobile station UE, the radio control station RNC #1 determines, in Step S304, that the handover of the mobile station UE to the (femto cell #2 should be allowed.

On the other hand, if the radio control station RNC #1 determines that the femto cell #2 is not managed as an available cell for the mobile station UE, the radio control station RNC #1 determines, in Step S303, that the handover of the mobile station UE to the femto cell #2 should not be allowed.

Back to FIG. 11, if the radio control station RNC #1 determines that the handover of the mobile station UE to the (femto cell #2 should not be allowed, the radio control station RNC #1 discards the measurement Report message (measurement report)" described above.

On the other hand, if the radio control station RNC #1 determines that the handover of the mobile station UE to the femto cell #2 should be allowed, the process of handing over the mobile station UE from the cell #1 to the femto cell #2 is performed in Step S2009.

In the mobile communication system according to the third embodiment of the present invention, service degradation to a specific mobile station UE in the femto cell #2 due to communication of an unspecified number of mobile stations in the femto cell #2 can be avoided.

### (Modified Embodiment 1)

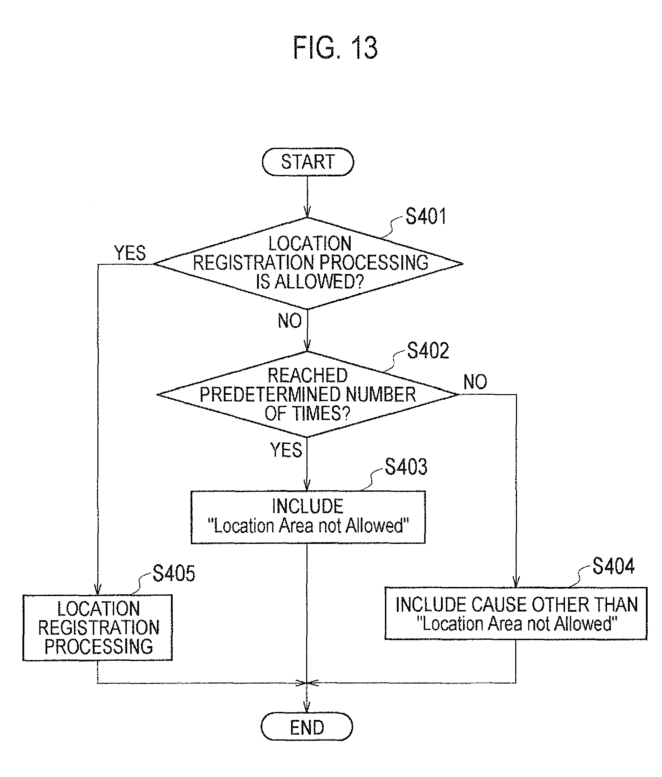

Furthermore, referring to FIG. 13 to FIG. 15, a mobile communication system according to Modified Embodiment 1 of the present invention is described.

In a mobile communication system according to this Modified Embodiment, the location registration response transmitter 15 of the exchange MSC/SGSN is configured to change a cause included in a "Routing Area Update Reject message (negative location registration response)" depending on the number of rejections of the location registration processing of the mobile station UE to a cell under such mobile base station NodeB.

Specifically, the location registration response transmitter 15 of the exchange MSC/SGSN may be configured to include in a "Routing Area Update Reject message (negative location registration response)" a cause other than the "Location Area not Allowed" indicating that location registration processing of the mobile station UE is not allowed when such number of rejections is less than a predetermined number of times. The other cause is, for example, "Network Failure" indicating a network failure, "Congestion" indicating network congestion, or the like.

Furthermore, the location registration response transmitter 15 of the exchange MSC/SGSN may be configured to include in a "Routing Area Update Reject message (negative location registration response)" the cause "Location Area not Allowed" indicating that the location registration processing of the mobile station UE is not allowed, when such number of rejections reaches a predetermined number of times.

Furthermore, the location registration processor 12 of the exchange MSC/SGSN may be configured to allow the location registration processing of the mobile station UE to a cell under the radio base station NodeB when such number of rejections reaches a predetermined number of times.

On the other hand, in the mobile communication system according to Modified Embodiment 1, the mobile station UE, which has transmitted the "Routing Area Update Request message (location registration request)" requesting the location registration processing using a specific location number, is configured to determine whether the location registration processing of the mobile station UE to a cell under the mobile base station NodeB should be retried depending on a cause included in the "Routing Area Update Reject message (negative location registration response)," when the mobile station UE receives the " outing Area Update Reject message (negative location registration response)" indicating that the location registration processing of the mobile station UE to a cell under the mobile base station NodeB is rejected.

Specifically, the mobile station UE is configured to determine not to retry the location registration processing of the mobile station UE to a cell under the radio base station NodeB when the "Routing Area Update Reject message (negative location registration response) " includes the cause "Location Area not Allowed" indicating that the location registration processing of the mobile station UE is not allowed.

Furthermore, the mobile station UE may be configured to determine not to retry the location registration processing of the mobile station UE to a cell under the radio base station NodeB, when the "Routing Area Update Reject message (negative location registration response)" includes a cause other than "Routing Area Update Reject message (negative location registration response)" indicating that the location registration processing of the mobile station UE is not allowed and the location registration processing of the mobile station UE to a cell under the radio base station NodeB has been retried by a predetermined number of times.

Hereinafter, a first operation of the exchange MSC/SGSN according to Modified Embodiment 1 is described referring to FIG. 13.

As shown in FIG. 13, when the exchange MSC/SGSN receives a "Routing Area Update Request message (location registration request" from the mobile station UE, the exchange MSC/SGSN determines, in Step S401, whether the location registration processing of the mobile station UE to the femto cell #2 under the femto radio base station NodeB #2 should be allowed.

If the exchange MSC/SGSN allows the location registration processing of the mobile station UE, the exchange MSC/SGSN performs such location registration processing in Step S405.

On the other hand, when rejecting the location registration processing of the mobile station UE, the exchange MS/SGSN determines, in Step S402, whether such number of rejections has reached a predetermined number of times.

If the exchange MSC/SGSN has determined that such number of rejections has reached a predetermined number of times, the exchange MSC/SGSN generates and transmits, in Step S403, to the mobile station UE a "Routing Area Update Reject message (negative location registration response)" including "Location Area not Allowed."

On the other hand, if the exchange MSC/SGSN has determined that such number of rejections has reached a predetermined number of times, the exchange MSC/SGSN generates and transmits, in Step S404, to the mobile station UE a "Routing Area Update Reject message (negative location registration response)" including a cause other than "Location Area not Allowed," for example, "Network Failure" indicating a network failure, "Congestion" indicating network congestion, or the like.

Hereinafter, a second operation of the exchange MSC/SGSN according to Modified Embodiment 1 is described referring to FIG. 14.

As shown in FIG. 14, when the exchange MSC/SGSN receives a "Routing Area Update Request message (location registration request)" from the mobile station UE, the exchange MSC/SGSN determines, in Step S501, whether the location registration processing of the mobile station UE to the femto cell #2 under the femto radio base station NodeB #2 should be allowed.

If the exchange MSC/SGSN allows the location registration processing of the mobile station UE, the exchange MSC/SGSN performs such location registration processing in Step S503.

On the other hand, when rejecting the location registration processing of the mobile station UE, the exchange MS/SGSN determines, in Step S502, whether such number of rejections has reached a predetermined number of times.

If the exchange MSC/SGSN has determined that such number of rejections has reached a predetermined number of times, the exchange MSC/SGSN performs such location registration processing in Step S503.

On the other hand, if the exchange MSC/SGSN has determined that such number of rejections reached a predetermined number of times, the exchange MSC/SGSN generates and transmits, in Step S504, to the mobile station UE a "Routing Area Update Reject message (negative location registration response)" including a cause other than "Location Area not Allowed," for example, "Network Failure" indicating a network failure, "Congestion" indicating network congestion, or the like.

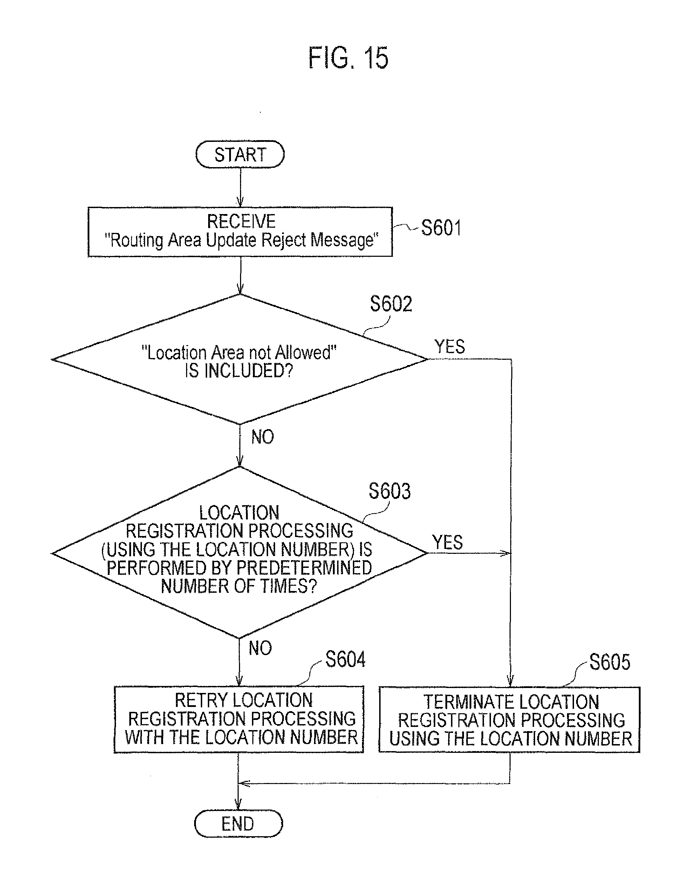

Finally, referring to FIG. 15, operations of the mobile station UE according to Modified Embodiment 1 is described.

As shown in FIG. 15, when the mobile station UE receives a "Routing Area Update Reject message (negative location registration response)" in Step S601, the mobile station UE determines, in Step S602, whether the cause included in such "Routing Area Update Reject message (negative location registration response)" is "Location Area not Allowed" indicating that the location registration processing of the mobile station UE is not allowed.

If the mobile station UE determines that the cause is other than "Location Area not Allowed, four example, if the cause is "Network Failure" indicating a network failure, "Congestion" indicating network congestion, or the like, the operation proceeds to Step S603.

On the other hand, if the mobile station UE determines that such cause is "Location Area not Allowed," the mobile station UE terminates, in Step S605, the location registration processing using the location number.

Furthermore, in Step S603, the mobile station UE determines whether the location registration processing using the location number has been retried by a predetermined number of times.

If the mobile station UE determines that the location registration processing has not been retried by a predetermined number of times, the mobile station UE retries, in Step S604, the location registration processing using the location number.

On the other hand, if the mobile station UE determines that the location registration processing has been retried by a predetermined number of times, the mobile station UE terminates, in Step S605, the location registration processing using the location number.

The exchange MSC/SGSN may be configured to allow the location registration processing using the location number instead of the termination of the location registration processing by the mobile station UE in Step S605.

In general, the same location number may be used in a plurality of cells in a mobile communication system. In such case, if the mobile station UE is configured to never perform the location registration processing using a specific location number when a mobile station UE, which has transmitted a "Routing Area Request message (location registration request) " requesting the location registration processing to a first cell using the specific location number, receives a "Routing Area Update Reject message (negative location registration response)," there is a concern that the location registration processing cannot be performed to not only the first cell but also to a second cell for which the same location number as the first cell is used.

Such concern can be solved by using the "Routing Area Update Reject message (negative location registration response)" including a cause other than "Location Area not Allowed" as in the mobile communication system according to Modified Embodiment 2 of the present invention.

However, unlimited repetition of the location registration processing using the location number when the mobile station UE receives a "Routing Area Update Reject message (negative location registration response)" leads to battery consumption. To solve such problem, a mobile communication system according to Modified Embodiment 2 of the present invention is configured to limit the number of times location registration processing can be performed using the location number to a certain number of times.

### (Modified Embodiment 2)

Although the above embodiment is described by citing a W-CDMS mobile communication system, the present invention is not confined to such mobile communication system but also applicable to an LTE (Long Term Evolution) mobile Communication system, for example. Hereinafter, a mobile communication system according to Modified Embodiment 2 is described by focusing on its differences from the mobile communication system according to the first embodiment described above.

In this Modified Embodiment, functions of the radio base station Nodes and the radio control station RNC are loaded into the radio base station eNB.

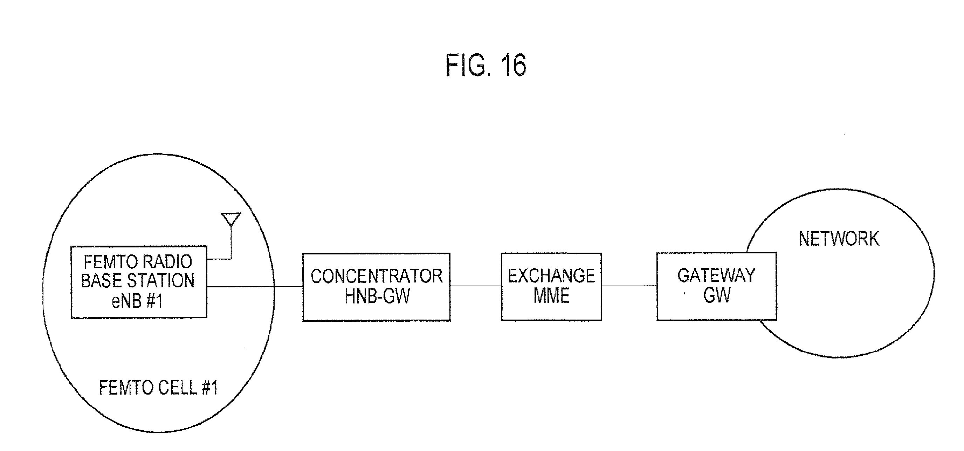

Specifically, as shown in FIG. 16, the mobile communication system according to Modified Embodiment 2 includes a femto radio base station eNB #1, a concentrator HNB-GW connected to the femto radio base station eNB #1, an exchange MME connected to the concentrator HNB-GW, and a gateway GW connected to the exchange MME and a network.

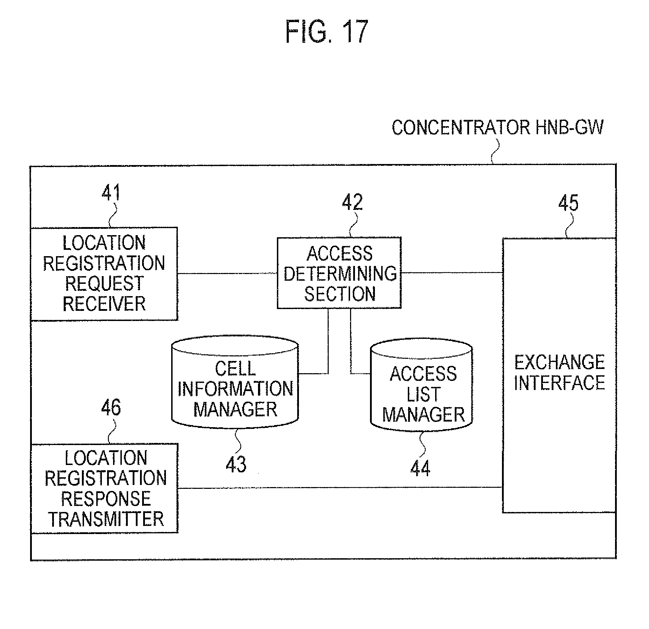

As shown in FIG. 17, the concentrator HNB-GW according to Modified Embodiment 2 includes a location registration request receiver 41, an access determining section 42, a cell information manager 43, an access list manager 44, an exchange interface 45, and a location registration response transmitter 46.

The location registration request receiver 41 is configured to receive a "Routing Area Update Request message (location registration request)" transmitted from the mobile station UE.

Similarly with the location registration processor 12, the access determining section 42 is configured to determine whether the location registration processing of the mobile station UE is allowed to a cell under a radio base station eNB designated by the "Routing Area Update Request Message (location registration request)" received by the location registration request receiver 41.

Similarly with the cell information manager 13, the cell information manager 43 is configured to store the "cell identifier" and the "state" by associating them with each other as shown in FIG.3.

Furthermore, similarly with the access list manager 44, the access list manager 44 is configured to manage an access list for setting mobile stations accessible to respective cells. As shown in Fig. 4, for example, the access list manager 44 is configured to store the access list associating the "cell identifier" and the "accessible mobile station" with each other.

The exchange interface 45 is configured to transfer to the exchange MME the "Routing Area Update Request message (location registration request)" when the access determining section 42 determines that the location registration processing of the mobile station UE is allowed, and to receive from the exchange MME a "Routing Area Update Accept message (positive location registration response)."

The location registration response transmitter 15 is configured to transmit to the mobile station UE the "Routing Area Accept message (positive location registration :response)" received by the exchange interface 45, when the access determining section 42 determines that the location registration processing of the mobile station UE should be allowed.

Furthermore, the location registration response transmitter 15 is configured to transmit to the mobile station UE a "Routing Area Update Reject message (negative location registration response) when the access determining section 42 determines that the location registration processing of the mobile station UE should be rejected.

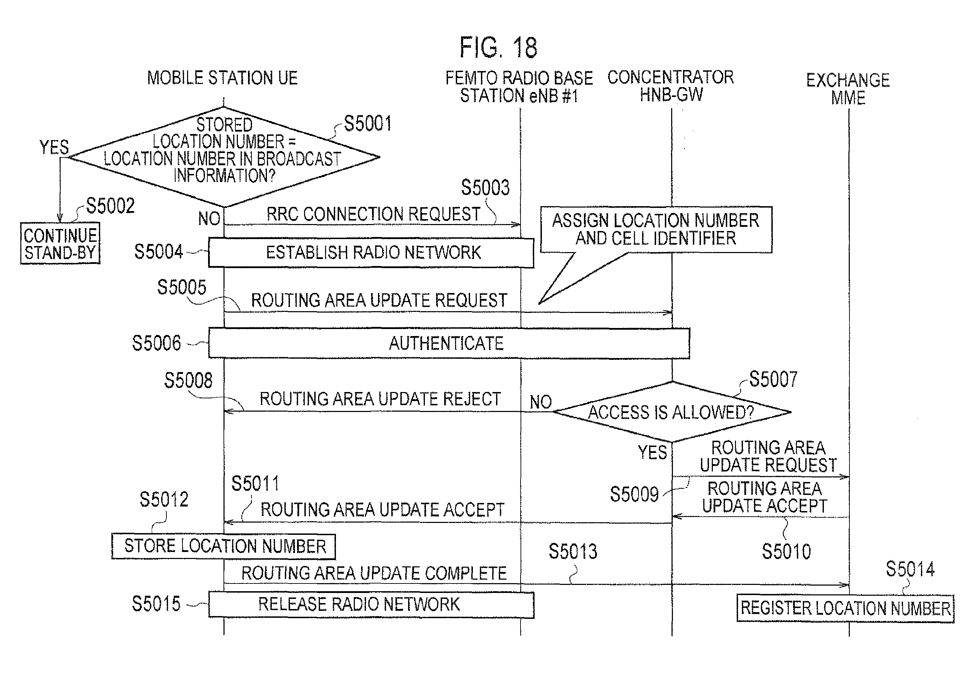

Referring to FIG. 18, operations of in the mobile communication system according to Modified Embodiment 2 are described. In the process, the mobile station UE that has performed the location registration processing to a cell under the radio base station eNB performs the location registration processing to a (femto cell #1 under a femto radio base station eNB #1.

As shown in FIG. 18, in Step S5001, the mobile station UE compares a location number of a cell in which the notification information of a cell corresponding to an optimum pilot signal is included, and a location number of a cell which is stored in the mobile station UE.

If the location numbers match, the mobile station UE ends the operation and, in Step S5002, continues stand by in a cell in which the location registration processing has been performed (standing by).

On the other hand, if the location numbers do not match, the mobile station UE transmits to the femto radio base station eNB #1 an "RRC Connection Request Message" to establish a radio network with the femto radio base station eNB #1 in Steps S50G3 and S5004, and transmits, in Step S5005, to the concentrator HMB-GW a "Routing Area Update Request message (location registration request)" to request the location registration processing to the femto cell #1.

Here, the femto radio base station eNB #1 assigns a location number and a cell identifier included in the notification information on the femto cell #1 described above to the ""Routing Area Update Request message (location registration request) " transmitted to the concentrator HMB-GW.

Following the authentication of the mobile station UE in Step S5006, the concentrator HMB-GW determines, in Step S5007, whether the location registration processing of the mobile station UE to the femto cell #1 should be allowed. Such determining method includes operations same as those shown in FIG. 6 described above.

When the concentrator HMB-GW has determined that the location registration processing of the mobile station UE to the femto cell #1 should be rejected, the concentrator HMB-GS transmits, in Step S5008, to the mobile station UE a "Routing Area Update Reject message (negative location registration response)" indicating the determination result.

Here, the concentrator HMB-GW may be so configured that when the concentrator HMB-GW has determined that the location registration processing of the mobile station UE to the femto cell #1 should be rejected, the concentrator HMB-GM notifies the mobile station UE of the information on a cell (frequency, cell identifier, or the like) to which the location registration processing should be performed.

Furthermore, the concentrator GMB-HW may be configured to, when the femto radio base station eNB #1 is releasing the network, transmit to the mobile station UE the "RRC Connection Release message (radio network release command") to notify to the mobile station the information on a cell (frequency, cell identifier, or the like) to which the location registration processing should be performed when the concentrator GMB-HW has determined that the location registration processing of the mobile station UE to the femto cell #1 should be rejected.

In such case, the concentrator HMB-GW may be configured to transmit to the femto radio base station eNB #1 the "radio access bearer release command" including information on such cell.

On the other hand, when the concentrator HMB-GW has determined that the location registration processing of the mobile station UE to the femto cell #1 should be allowed, the concentrator HMB-GW transmits, in Step S5009, to the exchange MME a "Routing Area Update Request message (location registration request)."

The concentrator HMB-GW transmits, in Step S5011, to the mobile station UE a "Routing Area Update Accept message (positive location registration response) received from the exchange MME in Step S5010.

The mobile station UE, which has received from the exchange MME the "Routing Area Update Accept message (positive location registration response)," stores, in Step S5012, a location number designated by the received "Routing Area Update Accept Message (positive location registration response)." Then, in Step S5013, the mobile station UE returns a "Routing Area Update Complete message (location registration completion response) to the exchange MME," and releases, in Step S5015, the radio network with the femto radio base station eNB #1.

The exchange MME, which has received the "Routing Area Update Complete message (location registration completion response)," registers, in Step S5014, the location number designated by the received "Routing Area Update Complete Message (location registration completion response)" by associating the location number with the mobile station UE.

Meanwhile, in the configuration of the mobile communication system according to Modified Embodiment 2, the LTE femto radio base station eNB #1 may be a WCDMA radio base station NodeB #1, and the LTE exchange MME may be a WCDMA exchange MSC/SGSN.

Furthermore, the concentrator HNB-GW may not be provided in the mobile communication system according to Modified Embodiment 2. In such case, the exchange MME may be configured to perform functions of the concentrator HNB-GW according to Modified Embodiment 2 (for example, functions performing the operation of Step S5007 in FIG. 18).

### (Modified Embodiment 3)

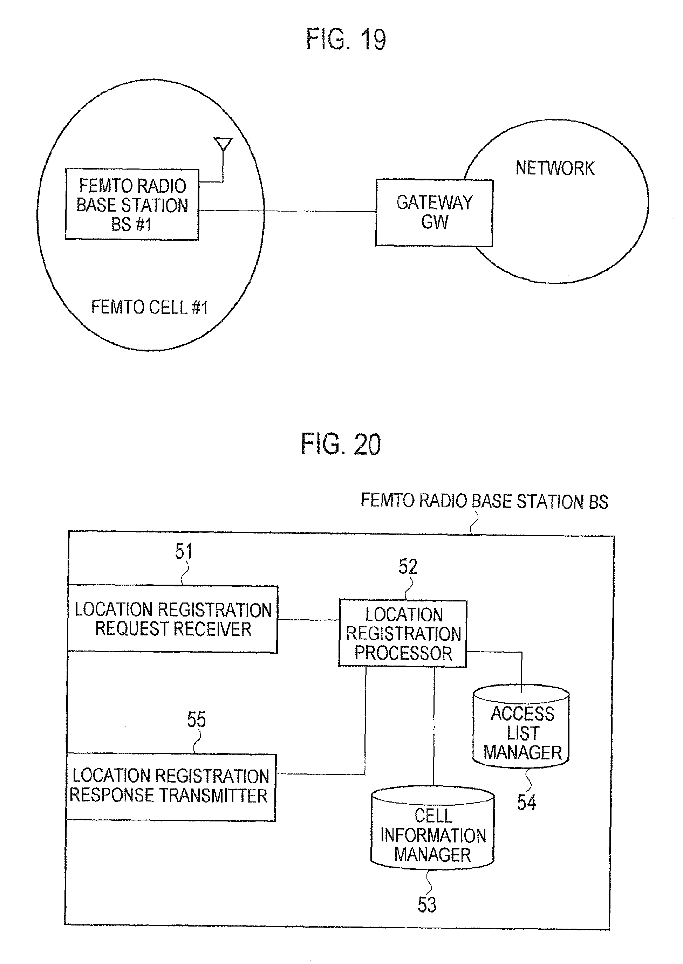

Referring to FIG 19 through FIG. 21, a mobile communication system according to Modified Embodiment 3 is described. Hereinafter, a mobile communication system according to Modified Embodiment 3 is described by focusing on its differences from the mobile communication system according to the first embodiment described above.

Specifically, as shown in FIG. 19, the mobile communication system according to Modified Embodiment 3 includes a femto radio base station BS #1 and a gateway GW connected to the femto radio base stations BS #1 and a network.

As shown in FIG. 20, the femto radio base station BS according to Modified Embodiment 3 includes a location registration request receiver 51, a location registration processor 52, a cell information manager 53, an access list manager 54, and a location registration response transmitter 55.

Functions of such femto radio base station BS are basically the same as the functions of the exchange MSC/SGSN shown in FIG. 2.

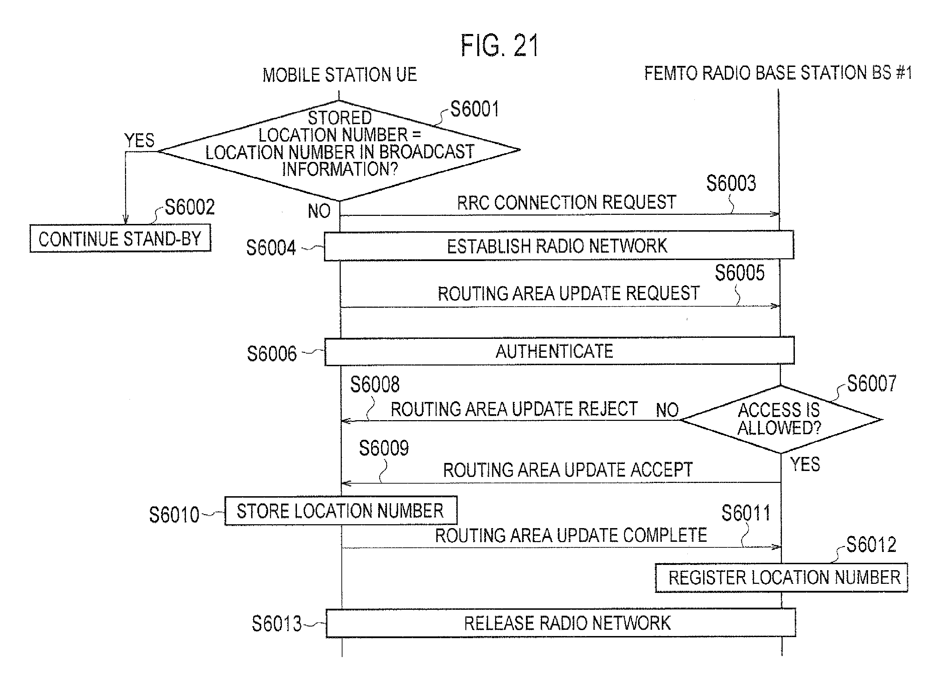

Referring to FIG. 21, operations in the mobile communication system according to Modified Embodiment 3 are described. In the process, the mobile station UE that has performed the location registration processing to a cell under the radio base station eNB performs the location registration processing to a femto cell #1 under the femto radio base station BS #1.

As shown in FIG. 21, in Step S6001, the mobile station UE compares a location number of a cell in which the notification information of a cell corresponding to an optimum pilot signal is included, and a location number of a cell which is stored in the mobile station UE.

If the location numbers match, the mobile station UE ends the operation and, in Step S6002, continues stand by in a cell in which the location registration processing has been performed (standing by).

On the other hand, if the location numbers do not match, the mobile station UE transmits to the femto radio base station BS #1 an "RRC Connection Request Message" to establish a radio network with the femto radio base station BS #1 in Steps S6003 and S6004, and transmits, in Step S6005, to the femto radio base station BS #1 a "Routing Area Update Request message (location registration request)" to request the location registration processing to the femto cell #1.

Following the authentication of the mobile station UE in Step S6006, the femto radio base station BS #1 determines, in Step S6007, whether the location registration processing of the mobile station UE to the femto cell #1 should be allowed. Such determining method includes operations same as those shown in FIG. 6 described above.

When the femto radio base station BS #1 has determined that the location registration processing of the mobile station UE to the femto cell #1 should be rejected, the femto radio base station BS #1, in Step S6008, to the mobile station UE a "Routing Area Update Reject message (negative location registration response)" indicating the determination result.

Here, the femto radio base station BS #1 may be so configured that when the femto radio base station BS #1 has determined that the location registration processing of the mobile station UE to the femto cell #1 should be rejected, the femto radio base station BS #1 notifies the mobile station UE of the information on a cell (frequency, cell identifier, or the like) to which the location registration processing should be performed.

Furthermore, the femto radio base station BS #1 may be configured to, when releasing the network, transmit to the mobile station UE the "RRC Connection Release message (radio network release command)" to notify to the mobile station the information on a cell (frequency, cell identifier, or the like) to which the location registration processing should be performed when the femto radio base station BS #1 has determined that the location registration processing of the mobile station UE to the femto cell #1 should be rejected.

On the other hand, when the femto radio base station BS #1 determines that the location registration processing of the mobile station UE to the femto cell #1 should be allowed, the femto radio base station BS #1 transmits, in Step S6009, to the mobile station UE a "Routing Area Update Accept message (positive location registration response)" indicating the determination result.

The mobile station UE, which has received from the femto radio base station BS #1 the "Routing Area Update Accept message (positive location registration response)," stores, in Step S6010, a location number designated by the received "Routing Area Update Accept Message (positive location registration response)." Then, in Step S6011, the mobile station UE returns a "Routing Area Update Complete message (location registration completion response)" to the femto radio base station BS #1, and releases, in Step S6013, the radio network with the femto radio base station BS #1.

The femto radio base station BS #1, which has received the "Routing Area Update Complete message (location registration completion response)," registers, in Step S6012, the location number designated by the received "Routing Area Update Complete Message (location registration completion response)" by associating the location number with the mobile station UE.

### (Modified Embodiment 4)

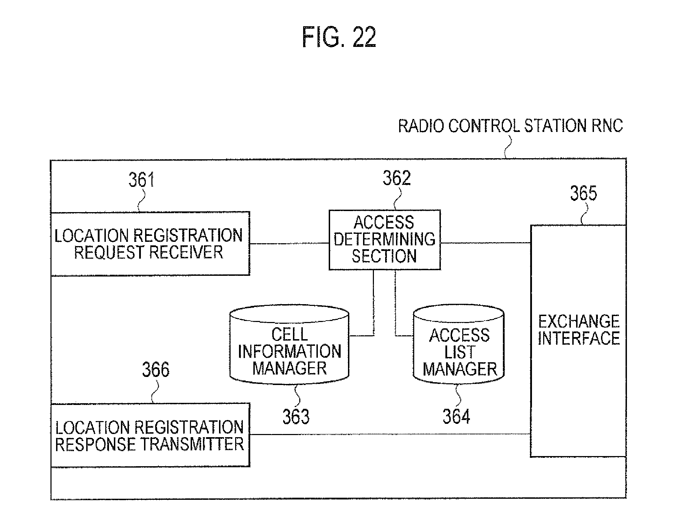

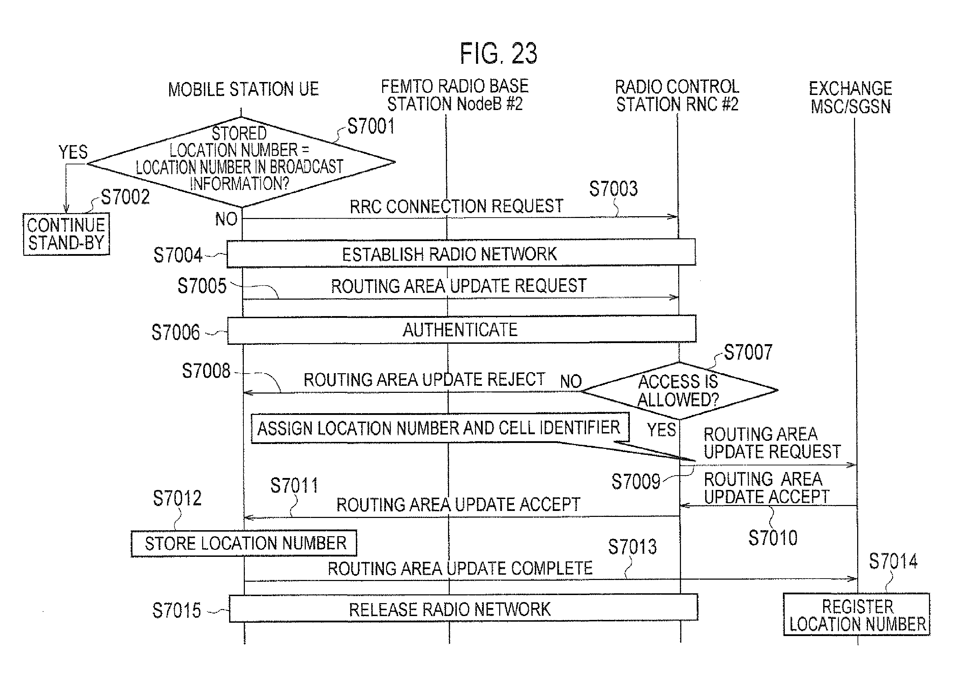

Referring to FIG. 22 and FIG. 23, a mobile communication system according to Modified Embodiment 4 is described. Hereinafter, a mobile communication system according to Modified Embodiment 4 is described by focusing on its differences from the mobile communication system according to the first embodiment described above.

Configuration of the mobile communication system according to Modified Embodiment 4 is the same as the mobile communication system according to the first embodiment shown in FIG. 1.

As shown in FIG. 22, a radio control station RNC according to Modified Embodiment 4 includes a location registration request receiver 361, an access determining section 362, a cell information manager 263, an access list manager 364, an exchange interface 365, and a location registration response transmitter 366.

Functions of such radio control station RNC are basically the same as the functions of the concentrator HNB-GW shown in FIG. 17.

Referring to FIG. 23, operations in the mobile communication system according to Modified Embodiment 4 are described. In the process, the mobile station UE that has performed the location registration processing to a cell #1 under the radio base station NodeB #1 performs the location registration processing to a femto cell #2 under the femto radio base station BS #2.

As shown in FIG. 23, in Step S7001, the mobile station UE compares a location number of a cell in which the notification information of a cell corresponding to an optimum pilot signal is included, and a location number of a cell which is stored in the mobile station UE.

If the location numbers match, the mobile station UE ends the operation and, in Step S7002, continues stand by in a cell in which the location registration processing has been performed (standing by).

On the other hand, if the location numbers do not match, the mobile station UE transmits to the radio control station RNC #2 an "RRC Connection Request Message" to establish a radio network with the radio control station RNC #2 in Steps S7003 and S7004, and transmits, in Step S7005, to the radio control station RNC #2 a "Routing Area Update Request message (location registration request)" to request the location registration processing to the femto cell #1.

Following the authentication of the mobile station UE in Step S7006, the radio control station RNC #2 determines, in Step S7007, whether the location registration processing of the mobile station UE to the femto cell #1 should be allowed. Such determining method includes operations same as those shown in FIG. 6 described above.

When the radio control station RNC #2 has determined that the location registration processing of the mobile station UE to the femto cell #1 should be rejected, the radio control station RNC #2 transmits, in Step S7008, to the mobile station UE a "Routing Area Update Reject message (negative location registration response)" indicating the determination result.

Here, the radio control station RNC #2 may be so configured that when the radio control station RNC #2 has determined that the location registration processing of the mobile station UE to the femto cell #1 should be rejected, the radio control station RNC #2 notifies the mobile station UE of the information on a cell (frequency, cell identifier, or the like) to which the location registration processing should be performed.

Furthermore, the radio control station RNC #2 may be configured to, when the femto radio base station NodeB #2 is releasing the network, transmit to the mobile station UE the "RRC Connection Release message (radio network release command)" to notify to the mobile station the information on a cell (frequency, cell identifier, or the like) to which the location registration processing should be performed when the concentrator the radio control station RNC #2 has determined that the location registration processing of the mobile station UE to the femto cell #1 should be rejected.

In such case, the radio control station RNC #2 may be configured to transmit to the femto radio base station NodeB #2 the "radio access bearer release command" including information on such cell.

On the other hand, when the radio control station RNC #2 has determined that the location registration processing of the mobile station UE to the femto cell #1 should be allowed, the radio control station RNC #2 transmits, in Step S7009, to the exchange MSC/SGSN a "Routing Area Update Request message (location registration request)."

Here, the radio control station RNC #2 assigns the location number and the cell identifier included in the above-described notification information of the femto cell #1 to the "Routing Area Update Request message (location registration request)" transmitted to the exchange MSC/SGSN.

The radio control station RNC #2 transmits, in Step S7011, to the mobile station UE a "Routing Area Update Accept message (positive location registration response)" received from the exchange MSC/SGSN in Step S7010.

The mobile station UE, which has received from the exchange MSC/SGSN the "Routing Area Update Accept message (positive location registration response)," stores, in Step S7012, a location number designated by the received "Routing Area Update Accept Message (positive location registration response)." Then, in Steps S7013, the mobile station UE returns a "Routing Area Update Complete message (location registration completion response) to the exchange MSC/SGSN," and releases, in Step S7015, the radio network with the radio control station RNC #2.

The exchange MSC/SGSN, which has received the "Routing Area Update Complete message (location registration completion response)," registers, in Step S7014, the location number designated by the received "Routing Area Update Complete Message (location registration completion response)" by associating the location number with the mobile station UE.

### (Modified Embodiment 5)

The functions of the radio control station RNC in the mobile communication system according to the third embodiment described above may be loaded to the concentrator HNB-GW in the mobile communication system shown in FIG. 16 or to the femto radio base station NS in the mobile communication system shown in FIG. 19.

Note that operation of the above described mobile station UE, the radio base station eNB, the exchange MME, the radio control station RNC, and of the concentrator HNB-GW may be implemented by means of hardware, software modules executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the mobile station UE, the radio base station eNB, the exchange MME, the radio control station RNC, or in the concentrator HNB-GW. Also, the storage medium and the processor may be provided in the mobile station UE, the radio base station eNB, the exchange MME, the radio control station RNC, or in the concentrator HNB-GW as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

### Industrial Applicability

Accordingly, the present invention is conceived to solve above problems. An object of the present invention is to provide a mobile communication system, a location registration method, a handover method, an exchange, a mobile station, and a radio control station, which are configured to avoid service degradation to a specific mobile station UE in a cell under a femto radio base station providing limited user services due to standby or communication of an unspecified number of mobile stations UE in the cell under the femto radio base station.

Another object of the present invention is to provide a mobile communication system, a location registration method, a handover method, an exchange, a mobile station, and a radio control station, which are configured to allow an unspecified number of mobile stations UE to stand by in or to be handed over to a cell under a femto radio base station according to setting by user or operators, so as to achieve flexible service and system operation.

## Claims

1. A mobile communication system configured to determine whether a location registration processing of a mobile station is allowed to a cell under a radio base station which is capable of being set to either an open state or a closed state, wherein the location registration processing of the mobile station is allowed to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

2. The mobile communication system according to claim 1, wherein the mobile communication system is configured to allow the location registration processing of all mobile stations to the cell under the radio base station, when the radio base station is set to the open state or when the radio base station is set to the closed state and manages the access list in which the specific information indicating all mobile stations is set as the information indicating the accessible mobile station.

3. The mobile communication system according to claim 1 or claim 2, wherein the mobile communication system is configured:
to determine whether the radio base station is set to the open state or the closed state depending on information included in a location registration request for requesting the location registration processing of the mobile station; and, on the basis of a result of the determination, to determine whether the location registration processing of the mobile station is allowed to the cell under the radio base station.

4. The mobile communication system according to any one of claims 1 to 3, wherein the mobile communication system is configured to notify the mobile station of information on a cell in which the location registration processing should be performed when the location registration processing of the mobile station to the cell under the radio base station has been rejected.

5. A mobile communication system configured to determine whether a handover of a mobile station is allowed to a cell under a radio base station which is capable of being set to either an open state or a closed state, wherein the handover of the mobile station is allowed to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

6. The mobile communication system according to claim 5, wherein the mobile communication system is configured to allow the handover of all mobile stations to the cell under the radio base station, when the radio base station is set to the open state or when the radio base station is set to the closed state and manages the access list in which the specific information indicating all mobile stations is set as the information indicating the accessible mobile station.

7. A location registration method in which whether a location registration processing of a mobile station is allowed to a cell under a radio base station which is capable of being set to either an open state or closed state is determined, wherein the location registration processing of the mobile station is allowed to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

8. A handover method in which whether a handover of a mobile station is allowed to a cell under a radio base station which is capable of being set to either an open state or closed state is determined, wherein the handover of the mobile station is allowed to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile station is set as information indicating the accessible mobile station.

9. An exchange configured to determine whether a location registration processing of a mobile station is allowed to a cell under a radio base station which is capable of being set to either an open state or a closed state, wherein the location registration processing of the mobile station is allowed to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

10. The exchange according to claim 9, wherein the exchange is configured to allow the location registration processing of all mobile stations to the cell under the radio base station, when the radio base station is set to the open state or when the radio base station is set to the closed state and manages the access list in which the specific information indicating all mobile stations is set as the information indicating the accessible mobile station.

11. The exchange according to claim 9 or claim 10, wherein the exchange is configured: to determine whether the radio base station is set to the open state or the closed state depending on information included in a location registration request for requesting the location registration processing of the mobile station; and, on the basis of a result of the determination, to determine whether the location registration processing of the mobile station is allowed to the cell under the radio base station.

12. A mobile station used in a mobile communication system configured to determine whether the location registration processing of the mobile station is allowed to a cell under a radio base station which is capable of being set to either an open state or a closed state, wherein a location registration request for requesting the location registration processing of the mobile station is transmitted to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

13. A radio control station configured to determine whether a handover of a mobile station is allowed to a cell under a radio base station which is capable of being set to either an open state or a closed state, wherein the handover of the mobile station is allowed to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

14. The radio control station according to claim 13, wherein the radio control station is configured to allow the handover of all mobile stations to the cell under the radio base station, when the radio base station is set to the open state or when the radio base station is set to the closed state and manages the access list in which the specific information indicating all mobile stations is set as the information indicating the accessible mobile station.

15. The exchange according to any one of claims 9 to 11, wherein the exchange is configured to change a cause included in a negative location registration response, depending on the number of rejections of the location registration processing of the mobile station to the cell under the radio base station, the negative location registration response notifying that the location registration processing of the mobile station to the cell under the radio base station has been rejected.

16. The exchange according to claim 15, wherein the exchange is configured to include, in the location registration response, a cause other than a cause indicating that the location registration processing of the mobile station is not allowed when the number of rejections is less than a predetermined number of times.

17. The exchange according to claim 15 or claim 16, wherein the exchange is configured to include, in the location registration response, the cause indicating that the location registration processing of the mobile station is not allowed, when the number of rejections reaches a predetermined number of times.

18. The exchange according to claim 15 or claim 16, wherein the exchange is configured to allow the location registration processing of the mobile station to the cell under the radio base station, when the number of rejections reaches a predetermined number of times.

19. A radio base station configured to determine whether a location registration processing of a mobile station is allowed to a cell under a radio base station which is capable of being set to an open state or a closed state, wherein the location registration processing to the cell under the radio base station is allowed, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

20. The radio base station according to claim 19, wherein the radio base station is configured to allow the location registration processing of all mobile stations to cells under the radio base station, when the radio base station is set to the open state or when the radio base station is set to the closed state and manages the access list in which the specific information indicating all mobile stations is set as the information indicating the accessible mobile station.

21. A concentrator configured to determine whether a location registration processing of a mobile station is allowed to a cell under a radio base station which is capable of being set to either an open state or a closed state, wherein the location registration processing" of the mobile station is allowed to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

22. The concentrator according to claim 21, wherein the concentrator is configured to allow the location registration processing of all mobile stations to the cell under the radio base station, when the radio base station is set to the open state or when the radio base station is set to the closed state and manages the access list in which the specific information indicating all mobile stations is set as the information indicating the accessible mobile station.

23. The concentrator according to claim 21 or claim 22, wherein the concentrator is configured: to determine whether the radio base station is set to the open state or the closed state depending on information included in a location registration request for requesting the location registration processing of the mobile station; and, on the basis of a result of the determination, to determine whether the location registration processing of the mobile station is allowed to the cell under the radio base station.

24. A radio control station configured to determine whether a location registration processing of a mobile station is allowed to a cell under a radio base station which is capable of being set to either an open state or a closed state, wherein the location registration processing" of the mobile station is allowed to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

25. The radio control station according to claim 24, wherein the radio control station is configured to allow the location registration processing of all mobile stations to the cell under the radio base station, when the radio base station is set to the open state or when the radio base station is set to the closed state and manages the access list in which the specific information indicating all mobile stations is set as the information indicating the accessible mobile station.

26. The radio control station according to claim 24 or claim 25, wherein the radio control station is configured: to determine whether the radio base station is set to the open state or the closed state depending on information included in a location registration request for requesting the location registration processing of the mobile station; and, on the basis of a result of the determination, to determine whether the location registration processing of the mobile station is allowed to the cell under the radio base station.

27. A radio base station configured to determine whether a handover of a mobile station is allowed to a cell under a radio base station which is capable of being set to an open state or a closed state, wherein the handover to the cell under the radio base station is allowed, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

28. The radio base station according to claim 27, wherein the radio base station is configured to allow the handover of all mobile stations to cells under the radio base station, when the radio base station is set to the open state or when the radio base station is set to the closed state and manages the access list in which the specific information indicating all mobile stations is set as the information indicating the accessible mobile station.

29. A concentrator configured to determine whether a handover of a mobile station is allowed to a cell under a radio base station which is capable of being set to either an open state or a closed state, wherein the handover of the mobile station is allowed to the cell under the radio base station, only when the radio base station is set to the open state, when the radio base station is set to the closed state and manages an access list in which the mobile station is set as an accessible mobile station, or when the radio base station is set to the closed state and manages an access list in which specific information indicating all mobile stations is set as information indicating the accessible mobile station.

30. The concentrator according to claim 29, wherein the concentrator is configured to allow the handover of all mobile stations to the cell under the radio base station, when the radio base station is set to the open state or when the radio base station is set to the closed state and manages the access list in which the specific information indicating all mobile stations is set as the information indicating the accessible mobile station.
